# EUROPEAN PATENT SPECIFICATION

(11) **EP 2 698 704 B1**
(45) Date of publication and mention of the grant of the patent: **13.09.2017**
(21) Application number: 13179702.9
(22) Date of filing: 08.08.2013
(51) Int. Cl.: G06F 3/14

(54) **Method and device for displaying image**
Verfahren und Vorrichtung zur Anzeige von Bildern
Dispositif et procédé d'affichage d'images

(30) Priority: 16.08.2012 KR 20120089692
(43) Date of publication of application: 19.02.2014
(73) Proprietor: Samsung Electronics Co., Ltd., Gyeonggi-do 443-742 (KR)
(72) Inventor: Choi, Young-Keun, Gyeonggi-do (KR)
(74) Representative: HGF Limited

(56) References cited:
- EP-A1- 1 909 473
- EP-A1- 2 387 202
- EP-A2- 1 612 657
- US-A1- 2008 130 923
- US-A1- 2008 216 125
- US-A1- 2011 225 330
- US-A1- 2011 241 985

## Description

### TECHNICAL FIELD

The present disclosure relates to an electronic device. More particularly, the present disclosure relates to a method and apparatus for displaying a shared image on electronic devices.

### BACKGROUND

In recent years, with a sudden growth of electronic devices such as a smart phone, a tablet Personal Computer (PC), etc., the electronic devices enabling wireless voice call and information exchange have become necessities of life. In the beginning of spreading, the electronic devices were recognized as portable devices simply enabling wireless call. With the development of technologies and the introduction of wireless Internet, the electronic devices are developing into multimedia devices performing functions of schedule management, game, remote control, image capturing, a projector, etc. to meet users' desires, beyond the portable devices simply enabling the wireless call.

Particularly, as the convenience and portability of electronic devices are becoming recently significant, miniaturized electronic devices are being launched. But, if a user executes an application by using the miniaturized electronic devices, he/she goes through an inconvenience in content use owing to small sizes of display devices. For instance, if the user executes an Internet application in a miniaturized smart phone, the miniaturized smart phone displays only some content of a web browser or zooms out contents within the web browser and displays the zoom-out content due to a small size of its touch screen. Because of this, to view other contents of the web browser, the user has to perform a control operation for dragging left/right a screen or zooming in contents within the web browser and displaying the zoom-in content. For another example, if the user executes a video application in the miniaturized smart phone, he/she can feel a difficulty in video viewing due to the small size of the touch screen. According to this, there is a need to provide a method capable of displaying an image larger even in a display device of a miniaturized electronic device.

European Patent Application Publication No. EP1909472 in the name of Koninkl Philips Electronics NV entitled "Digital Photo Frame" discloses a digital photo frame where movement of the frame can alter the manner in which the photo is displayed, for example by moving the frame forwards a zoom-in operation may be performed. The document further discloses that if two photo frames according to the invention are placed adjacent to each other, to be detected using RFID in the frames, then the image can be split across two frames.

US Patent Application Publication No. US2011/022530 entitled "Portable Universal Communication Device" discloses a portable device (e.g. smart phone, PDA or tablet computer) adapted to be in communication with a variety of external devices (e.g. a display, input devices such as mouse or keyboard) such that the portable device acts as a hub between all the external devices. The portable device may use an external display device to display the content currently displayed on the screen on the portable device, and control the content on the basis of instructions received via an external input device also in communication with the portable device. The portable device further comprises a 'Visuphone' configured to display a visual Interactive Voice Response (IVR) menu to allow voice input to be accepted by the portable device.

US Patent Application Publication No. US2008/0130923 in the name of Apple Computer, Inc. entitled "System and Method for dynamic control of audio playback based on the position of a listener" discloses identifying a preferred listening position for the user of a multi-channel sound system. The document discloses capturing an image of the user so as to determine her location, and further discloses adjusting the characteristics of the audio to correspond to any detected movement of the user.

US Patent Application Publication No. US2011/0241985 in the name of Smart Technologies ULC entitled "Method of displaying application in a multi-monitor computer system and multi-monitor computer system employing the method" discloses multi-monitor computer system wherein a plurality of display devices are connected to at least one computing device. The computing device operates an application management procedure to allow movement of application windows between display devices.

European Patent Application Publication No. EP1612657 in the name of Microsoft Corporation entitled "System and method for determining display differences between monitors in multi-monitor computer systems" discloses methods and systems for working with multi-monitor display arrangements. A system and method for determining differences and other conditions on a multi-monitor system is provided. This document discloses displaying sample images such as lines or wedges across the multiple monitors such that may be aligned correctly.

European Patent Application Publication No. EP2387202 in the name of LG Electronics Inc entitled "Electronic device and method of sharing contents thereof with other devices" relates to an electronic device and method for sharing contents thereof with other devices. In particular, this document discloses methods for content sharing from an electronic device to a first external electronic device. The content sharing is based on a distance between the electronic device and the first external electronic device.

US Patent Application Publication No. US2008/216125A1 in the name of Microsoft Corporation entitled "Mobile Device Collaboration" discloses methods for mobile device collaboration by detecting two mobile devices to be at a distance below a proximity threshold, splitting a video frame in two parts, displaying one part of the panorama photo on the display of one mobile device, and displaying the other part of the panorama photo on the display of the other mobile device.

### SUMMARY

The invention is set forth in the independent claims. To address the above-discussed deficiencies of the prior art, it is a primary object disclosure to provide a method and apparatus for sharing an image depending on a distance between electronic devices and displaying the image on a plurality of electronic devices.

Another aspect of the present disclosure is to provide a method and apparatus for splitting an image on an electronic device and sharing the image with other electronic device.

A further aspect of the present disclosure is to provide a method and apparatus for sharing a split image with other electronic device and displaying the image on an electronic device.

Yet another aspect of the present disclosure is to provide a method and apparatus for, when displaying an image on a plurality of electronic devices, outputting an audio signal according to a user's position.

Still another aspect of the present disclosure is to provide a method and apparatus for, when displaying a shared image on a plurality of electronic devices, determining a shared image display region on the basis of a display device size of each of the plurality of electronic devices.

Still another aspect of the present disclosure is to provide a method and apparatus for determining a shared image display region on the basis of a user input and displaying a shared image on the shared image display region on a plurality of non-aligned electronic devices.

Still another aspect of the present disclosure is to provide a method and apparatus for, when displaying a shared image on a plurality of electronic devices with display devices of different sizes, performing an additional function by using a region other than a shared image display region.

The above aspects are achieved by providing a method for displaying an image and an electronic device thereof.

According to one aspect of the present disclosure, an image display method of an electronic device is provided. The method includes displaying an image, detecting at least one other electronic device, if the electronic device and the detected at least one other electronic device are located within a first threshold distance, transmitting the image and display control information to the at least one other electronic device to display the image on the at least one other electronic device, and, if the electronic device and the detected at least one other electronic device are located within a second threshold distance, transmitting the image and display control information to the at least one other electronic device to display the split image by the number of detected at least one other electronic device and the display control information.

According to another aspect of the present disclosure, an image display method of an electronic device is provided. The method includes detecting at least one other electronic device, if the electronic device and the detected at least one other electronic device are located within a first threshold distance, receiving an image and display control information from the detected at least one other electronic device, displaying the received image, and, if the electronic device and the detected at least one other electronic device are located within a second threshold distance, transmitting the image and display control information to the at least one other electronic device to display the split image on the basis of the display control information. The display control information includes information on at least one of a region to be displayed in each electronic device among the whole region of an original image, zoom-in, and a region to display an image among the whole region of a display device of each electronic device.

According to a further aspect of the present disclosure, an image display electronic device is provided. The device includes one or more processors, a display device for presentation of information, a communication device for communication, a memory for storing data and instructions, and one or more programs. The one or more programs are stored in the memory and are configured to be executed by the one or more processors. The program includes an instruction set for displaying an image, detecting at least one other electronic device and, if the electronic device and the detected at least one other electronic device are located within a first threshold distance, transmitting the image and display control information to the at least one other electronic device to request for display of the image to the at least one other electronic device and, if the electronic device and the detected at least one other electronic device are located within a second threshold distance, displaying the the split image on the basis of the number of detected at least one other electronic device and the display control information.

According to a yet another aspect of the present disclosure, an image display electronic device is provided. The device includes one or more processors, a display device for presentation of information, a communication device for communication, a memory for storing data and instructions, and one or more programs. The one or more programs are stored in the memory and are configured to be executed by the one or more processors. The program includes an instruction set for detecting at least one other electronic device and, if the electronic device and the detected at least one other electronic device are located within a first threshold distance, receiving an image and display control information from the detected at least one other electronic device, displaying the received image and, if the electronic device and the detected at least one other electronic device are located within a second threshold distance, receiving an image and display control information to display the split image on the basis of the display control information. The display control information includes information on at least one of a region to be displayed in each electronic device among the whole region of an original image, zoom-in, and a region to display an image among the whole region of a display device of each electronic device.

In accordance with an aspect of the present invention, there is provided a method for displaying an image on a portable electronic communications device as claimed in claim 1. In accordance with another aspect of the present invention, there is provided a method for an image on a portable electronic communications device as claimed in claim 6. In accordance with another aspect of the present invention, there is provided a portable electronic communications device for displaying an image as claimed in claim 12. In accordance with another aspect of the present invention, there is provided a portable electronic communications device for displaying an image as claimed in claim 17.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1A is a block diagram illustrating a construction of an electronic device for sharing and displaying an image
FIG. 1B is a block diagram illustrating a processor of an electronic device for sharing and displaying an image
FIG. 2A is a diagram illustrating an example of splitting an image into two images with the same size, and zooming in the two images on an electronic device;
FIG. 2B is a diagram illustrating an example of splitting an image into three images having the same size and zooming in the three images in an electronic device;
FIG. 2C is a diagram illustrating an example of splitting an image into three images having different sizes and zooming in the three images in an electronic device;
FIG. 3A is a flowchart illustrating a procedure for displaying an image according to a distance on an electronic;
FIG. 3B is a diagram illustrating a means for displaying an image on an electronic device;
FIG. 4A is a flowchart illustrating a procedure of sharing an image with other electronic device with a display device of the same size and displaying the shared image on an electronic device according to an embodiment of the present disclosure;
FIG. 4B is a flowchart illustrating a procedure of sharing an image with other electronic device with a display device of a different size and displaying the shared image on an electronic device according to another embodiment of the present disclosure;
FIGS. 4C and 4D are diagrams illustrating examples of displaying a shared image on two electronic devices with display devices of different sizes;
FIG. 5 is a diagram illustrating an example of displaying an image when a distance to detected other electronic device is greater than a first threshold distance in an electronic device;
FIG. 6 is a diagram illustrating an example of displaying a shared image when a distance to detected other electronic device is equal to or is less than a first threshold distance in an electronic device;
FIG. 7 is a diagram illustrating an example of displaying a shared image when a distance to detected other electronic device is equal to or is less than a second threshold distance in an electronic;
FIG. 8 is a flowchart illustrating a procedure of receiving a shared image from detected other electronic device and displaying the shared image on an electronic device according to a further embodiment of the present disclosure;
FIG. 9 is a flowchart illustrating a procedure of outputting an audio signal toward a user's position in an electronic device;
FIGS. 10A and 10B are diagrams illustrating examples of outputting an audio signal in a plurality of electronic devices displaying a shared image;
FIGS. 11A to 11D are diagrams illustrating examples of transmitting an image including a video User Interface (UI) to detected other electronic device and displaying the image on an electronic device;
FIGS. 12A to 12C are diagrams illustrating examples of sharing an Internet image depending on a distance between electronic devices and displaying the Internet image on a plurality of the electronic devices; and
FIGS. 13A and 13B are diagrams illustrating examples of determining a shared image display region in a plurality of non-aligned electronic devices.

### DETAILED DESCRIPTION OF THE DISCLOSURE

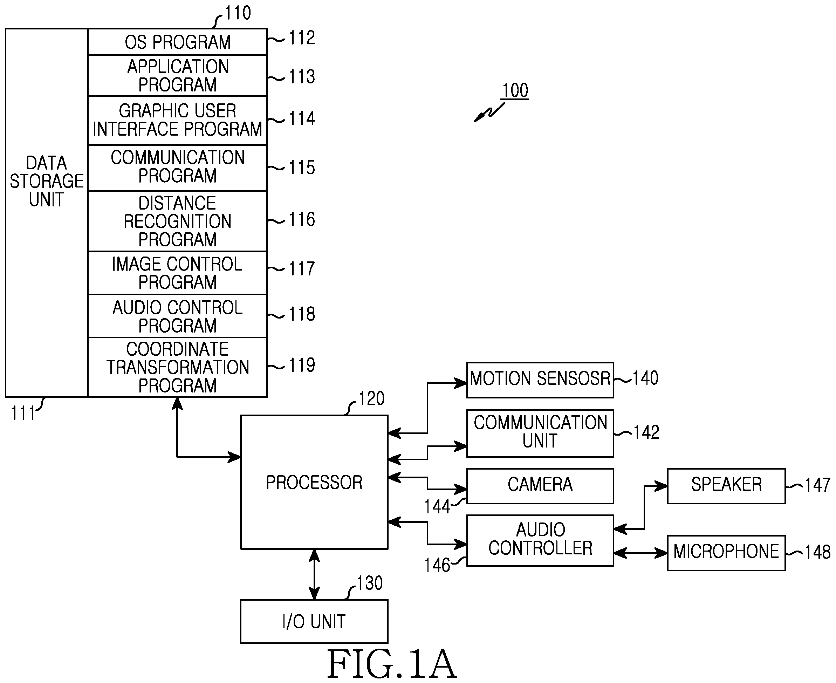

FIGURES 1A through 13B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Preferred embodiments of the present disclosure will be described herein below with reference to the accompanying drawings. In the following description, well-known functions or constructions are not described in detail since they would obscure the disclosure in unnecessary detail. And, terms described below, which are defined considering functions in the present disclosure, can be different depending on user and operator's intention or practice. Therefore, the terms should be defined on the basis of the disclosure throughout this specification.

In the following description, an electronic device can be a mobile communication terminal with a display device, a smart phone, a tablet Personal Computer (PC), an MPEG Audio Layer-3 (MP3) player, a laptop computer, a netbook computer, a computer, a television and the like.

FIG. 1A is a block diagram illustrating a construction of an electronic device 100 for sharing and displaying an image.

Referring to FIG. 1A, the electronic device 100 includes a memory 110, a processor 120, an Input Output (IO) unit 130, a motion sensor 140, a communication unit 142, a camera 144, an audio controller 146, a speaker 147, and a microphone 148. The memory 110 and the processor 120 can be composed of a plurality of memories 110 and a plurality of processors 120, respectively.

The memory 110 includes a data storage unit 111, an Operating System (OS) program 112, an application program 113, a graphic User Interface (UI) program 114, a communication program 115, a distance measurement program 116, a display control program 117, an audio control program 118, a coordinate transformation program 119 and the like. Also, a soft program can be expressed as a set of instructions and therefore, the software program is also referred to as an instruction set as well as a module.

The memory 110 can store one or more programs that include instructions.

The data storage unit 111 stores data generated during the execution of a function corresponding to a program stored in the memory 110. The data storage unit 111 can store model information of the electronic device 100. At this time, the model information of the electronic device 100 can include display device size information of the electronic device 100 and resolution information thereof. The display device size information indicates size information of a region capable of displaying an image on the electronic device 100. Also, the data storage unit 111 can store a threshold distance for a distance between the electronic device 100 and at least one other electronic device that is detected by the communication program 115. That is, the data storage unit 111 can store a first threshold distance and a second threshold distance. At this time, the first threshold distance is stored as a value greater than the second threshold distance. Here, the first threshold distance represents a distance for allowing the electronic device 100 and at least one other electronic device to convert into a sharing mode and operate in the sharing mode, and the second threshold distance represents a distance for allowing the electronic device 100 and at least one other electronic device to convert into a split mode and operate in the split mode. Here, the sharing mode indicates a mode in which the electronic device 100 and at least one other electronic device display the same portion of the same image, and the split mode indicates a mode in which the electronic device and at least one other electronic device display different portions of the same image. Further, the data storage unit 111 can store a sound filter by predetermined user position. Here, the sound filter by user position can be previously acquired according to experiments, or can be updated through learning of the electronic device 100.

The OS program 112 (for example, a built-in operating system such as WINDOWS, LINUX, Darwin, RTXC, UNIX, OS X, and VxWorks) includes various software constituent elements controlling a general system operation. For instance, the control of the general system operation means memory management and control, storage hardware (device) control and management, power control and management and the like. The OS program 112 performs a function of making smooth communication between various hardware (device) and software constituent element (program).

The application program 113 includes applications of a browser, an electronic mail (e-mail), a message, word processing, an address book, a widget, Digital Right Management (DRM), voice recognition, voice replication, a position determining function, a location-based service, a video, music and the like.

The graphic user interface program 114 includes at least one software constituent element for providing a user interface using a graphic between a user and the electronic device 100. That is, the graphic user interface program 114 includes at least one software constituent element for displaying user interface information on a display device (e.g., a touch screen) included in the Input/Output (I/O) unit 130. According to the present disclosure, the graphic user interface program 114 includes an instruction for displaying an image and a related User Interface (UI) on the I/O unit 130. For example, the graphic user interface program 114 can include an instruction for displaying a video application on the I/O unit 130, and include an instruction for visually displaying a related UI for the displayed video application. For another example, the graphic user interface program 114 can include an instruction for splitting and visually displaying a video image and a related UI for a video application on the I/O unit 130.

The communication program 115 enables communication with other electronic devices such as a server and/or a portable terminal, etc. through the communication unit 142. The communication program 115 transmits/receives information required for the electronic device 100 and other electronic devices to display a shared image. That is, the communication program 115 transmits/receives at least one of model information, size information of a display device, resolution information, an image, split information, a user voice signal reception time, and an audio signal with detected other electronic device.

The distance measurement program 116 can determine a distance to at least one other electronic device detected by the motion sensor 140 and the communication unit 142. If the distance to the detected at least one other electronic device is equal to or is less than the first threshold distance stored in the data storage unit 111, the distance measurement program 116 determines an operation for the sharing mode and, if the distance is equal to or is less than the second threshold distance, the distance measurement program 116 determines an operation for the split mode.

Also, the distance measurement program 116 can analyze an image captured by the camera 144 of the electronic device 100 and determine a distance between the electronic device 100 and a user. In detail, the distance measurement program 116 can analyze the image captured by the camera 144 of the electronic device 100 and measure a distance and position of each user included within the captured image. At this time, the distance measurement program 116 can determine a position of each user by using not only the image captured by the camera 144 of the electronic device 100 but also an image captured by a camera 144 of the detected at least one electronic device. Further, the distance measurement program 116 can determine a position of a user by analyzing a difference between a time at which a audio signal is received through the microphone 148 of the electronic device 100 and a time at which a audio signal of the detected at least one other electronic device is received through the communication unit 142. At this time, the distance measurement program 116 analyzes reception time of a plurality of audio signals received by the microphone 148 and reception time of a plurality of audio signals received through the communication unit 142 for each user and then, can determine a position by user based on the audio signals analyzed for each user and the distance between the electronic device 100 and the detected at least one other electronic device.

The display control program 117 can recognize as an image a screen displayed by the I/O unit 130 and control the image. In other words, the display control program 117 can control a function for sharing with other electronic device an image to be displayed on a display device (not shown) of the I/O unit 130 according to the execution of an application. For example, the display control program 117 can control a function for sharing with other electronic device a video image to be displayed on the display device (not shown) of the I/O unit 130 according to the execution of a video application. For further example, the display control program 117 can control a function for sharing with other electronic device a web browser image to be displayed on the display device (not shown) of the I/O unit 130 according to the execution of an Internet application.

If the electronic device 100 is in the sharing mode, the display control program 117 receives model information of detected other electronic device, resolution information thereof, number information thereof, and location information thereof from the motion sensor 140 and the communication unit 142 and on the basis of the received information, the display control program 117 generates split information for a shared image. Here, the location information means information representing in which direction of the electronic device 100 the detected other electronic device is located. Also, the split information is information required for the electronic device 100 and the detected at least one other electronic device to operate in the split mode and display different portions of the same image. The split information can include information about a region to be displayed in each electronic device among the whole region of an original image, zoom-in information by mode, and information about a region to display an image among the whole region of a display device of each electronic device. The display control program 117 can include an instruction for transmitting an image that is being displayed by the I/O unit 130 or an image stored in a buffer to be displayed and generated split information, to the detected other electronic device. Also, the display control program 117 can include an instruction for real-timely transmitting an image to be updated and displayed according to an application that is being executed or a user control, to the detected other electronic device. Here, the image transmitted to the detected other electronic device includes a graphic element representing a UI of an application which is being executed in the electronic device 100. For example, the display control program 117 can include an instruction for, when the electronic device 100 is executing a video application, transmitting not merely a video image but also an image including a UI (e.g., a pause icon, a play icon, and a stop icon and the like) of the video application to the detected other electronic device.

Also, if the electronic device 100 is in the split mode, the display control program 117 can split an original image to be displayed into a plurality of partial images on the basis of split information previously generated in the sharing mode and then, distinguish the plurality of split images into an image to be displayed in the electronic device 100 and an image to be displayed in the other electronic device, display the image to be displayed in the electronic device 100, and transmit the image to be displayed in other electronic device to the other electronic device. Also, if the electronic device 100 is in the split mode, the display control program 117 can determine a region of an image to be displayed in the electronic device 100 among the whole region of an original image to be displayed on the basis of the split information previously generated in the sharing mode, display only the determined region, and transmit the original image to be displayed to the other electronic device. At this time, the other electronic device can split the received original image into a plurality of partial images according to the split information and then display only a corresponding image among the plurality of split images, or the other electronic device can determine a corresponding image region in the received original image according to the split information and then display only the corresponding image region.

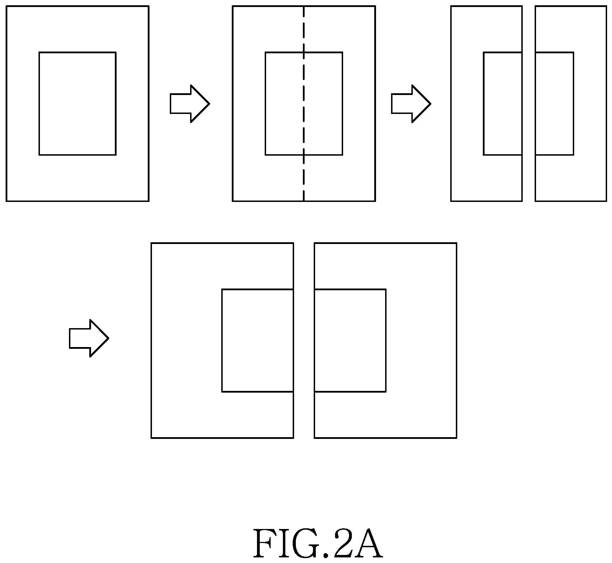

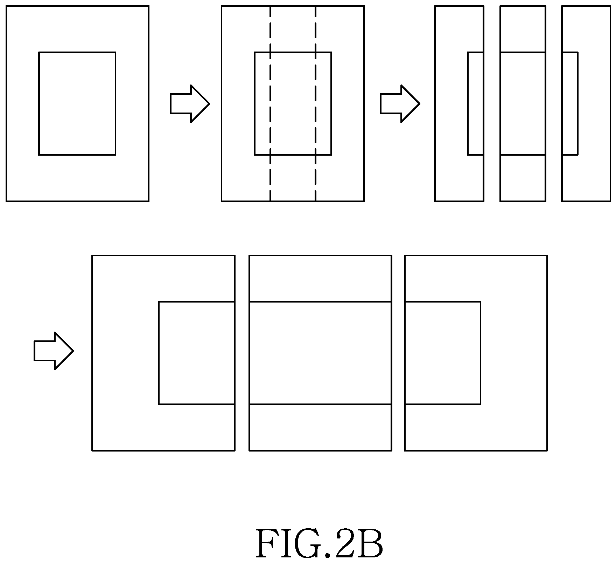

Also, the display control program 117 can generate image split information according to a display device size of the electronic device 100 and a display device size of the detected electronic device. That is, if at least one other electronic device with a display device of the same size as the display device size of the electronic device 100 is detected, the display control program 117 can generate split information for splitting an image by the number of detected other electronic devices, with the same size. For example, if one electronic device with a display device of the same size as the display device size of the electronic device 100 is detected, as illustrated in FIG 2A, the display control program 117 can generate split information for splitting an image into two images having the same size and zooming in each of the split two images as much as the display device size of the electronic device 100. For another example, if two electronic devices with display devices of the same size as the display device size of the electronic device 100, as illustrated in FIG. 2B, the display control program 117 can generate split information for splitting an image into three images having the same size and then, zooming in the split three images as much as the display device size of the electronic device 100.

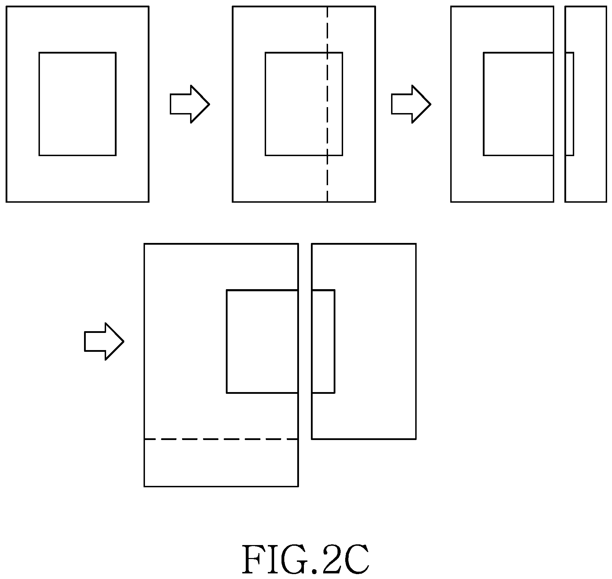

Alternatively, if other electronic device with a display device of a size different from the display device size of the electronic device 100 is detected, the display control program 117 can generate split information for splitting an original image into a plurality of the split images having different sizes corresponding to display device sizes of the electronic device 100 and the other electronic device. For example, if one electronic device with a display device of a size smaller than the display device size of the electronic device 100 is detected, as illustrated in FIG. 2C, the display control program 117 can generate split information for splitting an original image into two images corresponding to display device sizes of the electronic device 100 and the detected other electronic device, and zooming in each of the split two images as much as each of the display device sizes of the electronic devices. At this time, the display control program 117 can change a resolution of an image to be displayed, depending on the number of detected other electronic devices and an array of the electronic device 100 and the detected other electronic devices.

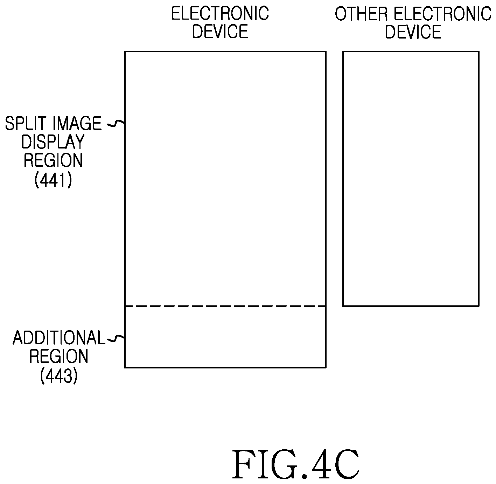

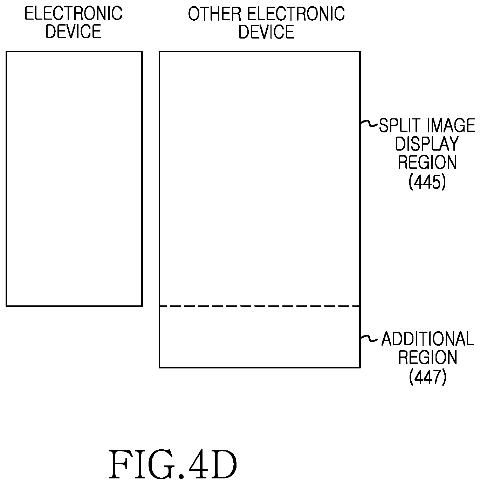

Also, the display control program 117 determines a region to display an image among the whole region of a display device of each electronic device on the basis of a display device size of the electronic device 100 and a display device size of detected other electronic device, and includes information about the image display region of the display device, in split information. For example, as illustrated in FIG. 4C, if the display device size of the electronic device 100 is larger than the display device size of the detected other electronic device, the display control program 117 can distinguish the whole region of the display device of the electronic device 100 into a split image display region and an additional region by considering the display device size of the detected other electronic device. For another example, as illustrated in FIG. 4D, if the display device size of the electronic device 100 is smaller than the display device size of the detected other electronic device, the display control program 117 can distinguish the whole region of the display device of the detected other electronic device into a split image display region and an additional region on the basis of the display device size of the electronic device 100. At this time, the display control program 117 includes an instruction for displaying an image showing the execution of other application in the additional region. For example, the display control program 117 includes an instruction for displaying information about a shared image in the additional region during shared image display, or displaying an image for an application whose additional execution is requested according to a user request.

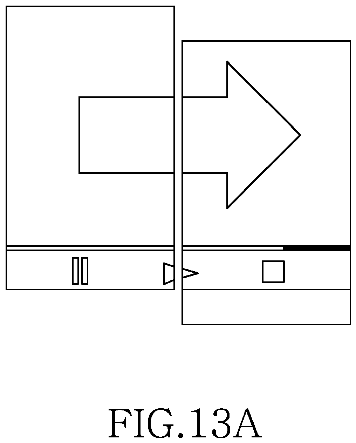

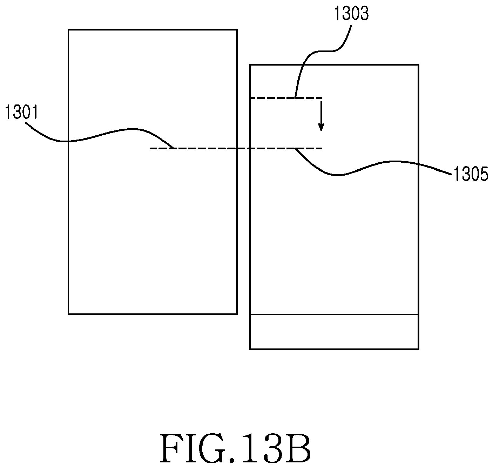

Further, the display control program 117 controls a function for, when the electronic device 100 and detected other electronic device are not aligned in line, synchronizing shared images displayed in the two electronic devices. For instance, the display control program 117 controls a function for, when the two electronic devices are not aligned in line as illustrated in FIG. 13A, presenting guide lines 1301 and 1303 for aligning shared images displayed in the two electronic devices, recognizing a user control for the guide lines 1301 and 1303, and determining a region to display an image among the whole region of a display device of each electronic device and a region to be displayed in each electronic device among the whole region of an original image, thereby displaying the shared images by aligning the shared images in line as illustrated in FIG. 13B. Here, to synchronize the shared images with each other, the display control program 117 can use user inputs of various schemes. For example, the display control program 117 can request for a user to do a line touch for a plurality of electronic devices, analyze a coordinate corresponding to the line touch, and determine a region to display an image among the whole region of a display device of each electronic device and a region to be displayed in each electronic device among the whole region of an original image, thereby displaying the shared images by aligning the shared images in line in the plurality of electronic devices.

Also, the display control program 117 can receive an image of other electronic device detected through the motion sensor 140 and the communication unit 142 and split information thereof from the detected other electronic device, and display the received image. If the electronic device 100 is in the sharing mode, the display control program 117 controls to display an image, which is real-timely received from the detected other electronic device on a display device (not shown) of the electronic device 100. At this time, if a display device size of the electronic device 100 is different from that of the detected other electronic device, instead of splitting the received image, the display control program 117 can zoom in the received image according to zoom-in information included in the split information and display the zoom-in image. According to this, the electronic device 100 being in the sharing mode can display the same image as the detected other electronic device.

If the electronic device 100 is in the splitting mode, the display control program 117 can either real-timely receive a split image from detected other electronic device and display the received image or can real-timely receive an original image from the detected other electronic device, split the original image on the basis of split information, and display a split image of a predetermined region among the whole region of the original image. That is, if a split image including only a region to be displayed in the electronic device 100 among the whole region of the original image is received from the detected other electronic device, the display control program 117 can zoom in or maintain the received split image according to zoom-in information among the split information and display the image on a display device of the electronic device 100. Alternatively, if an image including the whole region of the original image is received from the detected other electronic device, the display control program 117 determines a region to be displayed in the electronic device 100 among the whole region of the original image according to the split information. Next, after cutting the determined region from the original image, the display control program 117 can either zoom in or maintain an image of the cut region according to zoom-in information and display the image of the cut region in the display device of the electronic device 100 or can zoom in or maintain the original image according to the zoom-in information and display only the determined region in the display device of the electronic device 100.

If the electronic device 100 is in the sharing mode or the split mode, the audio control program 118 controls an audio signal to be outputted to the speaker 148, based on the number of other electronic devices detected by the motion sensor 140 and the communication unit 142, the number of users determined by the distance measurement program 116, and a position by user. In other words, to provide a stereoscopic sound and surround system, the audio control program 118 can control the audio controller 146 to divide an audio channel based on the number of detected other electronic devices, generate a sound filter designed optimally based on the number of users and the position by user, and output an audio signal through the generated filter. At this time, the sound filter can be generated using the known various techniques such as a Head Room Transfer Filter (HRTF) and the like. At this time, the audio control program 118 can either generate a sound filter having directivity based on the number of users and the position by user, or read out a sound filter previously determined according to a user position from the data storage unit 111 and apply the read sound filter. Also, the audio control program 118 includes an instruction for transmitting information about the generated sound filter to detected other electronic device.

If coordinate information of an image onto which data is inputted is received from detected other electronic device, the coordinate transformation program 119 controls to execute a function corresponding to a received image coordinate, and transmits the execution result to the detected other electronic device through the communication unit 142. Also, when an image received from the detected other electronic device is being displayed, if a user touch on the image is sensed, the coordinate transformation program 119 transmits a coordinate of the touch-sensed image to the detected other electronic device through the communication unit 142. As a result, the coordinate transformation program 119 enables the electronic device 100 and the detected other electronic device to display the same result according to the data inputted in the detected other electronic device.

Although not illustrated, the processor 120 can be composed of at least one processor and a peripheral interface. Also, the processor 120 executes a specific program (i.e., instruction set) stored in the memory 110 and performs a plurality of specific functions corresponding to the executed program.

The I/O unit 130 includes an input device receiving data input and an output device transmitting data output, and provides an interface to a user. For example, the I/O unit 130 can be a touch screen in which data input and output are concurrently possible. The I/O unit 130 can receive an input of image data, and can display a corresponding image received.

The motion sensor 140 can detect a motion of an object and a location thereof. The motion sensor 140 can detect other devices at least one other electronic device in the peripheral. Further, the motion sensor 140 can determine the number of detected other electronic devices and locations thereof. For example, the motion sensor 140 can determine that one detected other electronic device is located at the left side of the electronic device 100, and one detected other electronic device is located at the right side thereof.

The communication unit 142 can include a Radio Frequency (RF) receiver and transceiver and/or an optical (e.g., infrared) receiver and transceiver. For example, the communication unit 142 can include a wireless communication system that supports any one of a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Fidelity (WiFi) network, a Near Field Communication (NFC) network, an Infrared Data Association (IrDA) network, a Wireless interoperability for Microwave Access (WiMAX) network, or/and a Bluetooth network. A wireless communication system according to the present disclosure is not limited to the wireless communication system supporting the aforementioned networks but can be a wireless communication system supporting other networks. The communication unit 142 according to the present disclosure can detect at least one other electronic device, and can communicate with the detected at least one other electronic device. The communication unit 142 can measure a distance between the electronic device 100 and the detected at least one other electronic device through signal transmission/reception with the detected at least one other electronic device. Also, the communication unit 142 transceives at least one of model information, display device size information, resolution information, an image, split information, a user voice signal reception time, an audio signal, and a coordinate at which a user input is sensed, with the detected at least one other electronic device.

The audio controller 146 is coupled to the speaker 147 and the microphone 148, and performs a function of audio stream input and output such as voice recognition, voice replication, digital recording and telephony functions. That is, the audio controller 146 performs a function for assigning directivity to an audio signal by using a sound filter generated by the audio control program 118, outputting the audio signal through the speaker 147, and receiving an input of a user's voice signal through the microphone 148. The audio controller 146 receives a data stream through the processor 120, converts the received data stream into an electric stream (i.e., electric signal), and forwards the converted electric stream to the speaker 147. The audio controller 146 receives a converted electric stream from the microphone 148, converts the received electric stream into an audio data stream, and transmits the converted audio data stream to the processor 120. The audio controller 146 can include a detachable earphone, headphone or head set. The speaker 147 converts the electric stream received from the audio controller 146 into human-audible sound waves and outputs the sound waves. The microphone 148 converts sound waves forwarded from human or other sound sources, into electric streams.

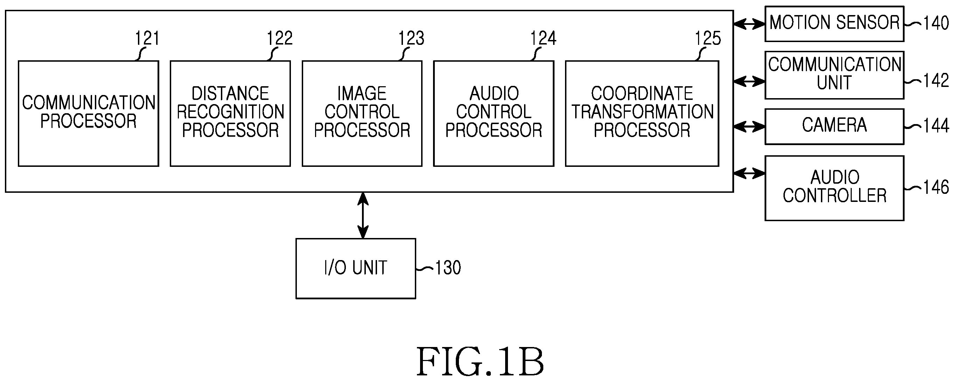

FIG. 1B illustrates a processor of an electronic device 100 for sharing and displaying an image .

As illustrated in FIG. 1B, the processor 120 of the electronic device 100 includes a communication processor 121, a distance measurement processor 122, an image control processor 123, an audio control processor 124, and a coordinate transformation processor 125. The processor 120 of the electronic device 100 can perform the functions described in FIG. 1A by controlling operations of the memory 110, the I/O unit 130, the motion sensor 140, the communication unit 142, the camera 144, the audio controller 146, the speaker 147, and the microphone 148.

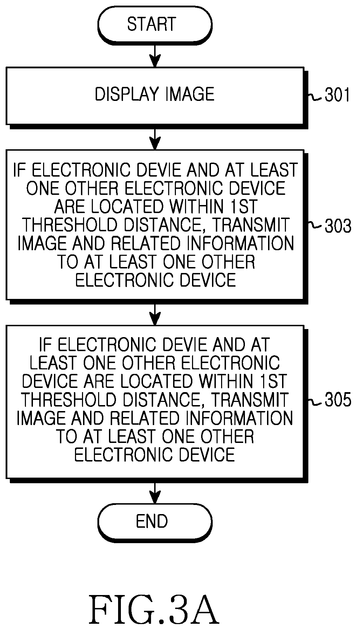

FIG. 3A illustrates a procedure for displaying an image based on a distance in an electronic device 100.

Referring to FIG. 3A, in step 301, the electronic device 100 displays an image. Here, the image refers to an image including all graphic elements (e.g., an icon, a UI, an image and the like) displayed in a display device of the electronic device 100.

Next, the electronic device 100 proceeds to step 303 and, if the electronic device 100 and at least one other electronic device are located within a first distance, transmits the image and related information to the at least one other electronic device. In detail, the electronic device 100 detects peripheral at least one other electronic device and, if the detected other electronic device is located within the first threshold distance, real-timely transmits an image to be displayed in the electronic device 100 and information necessary for displaying an image on the detected other electronic device. For instance, when the electronic device 100 is playing and displaying a video, the electronic device 100 can either transmit the video to the detected other electronic device located within the first threshold distance or can real-timely transmit an image to be displayed at video playing to the detected other electronic device located within the first threshold distance. Here, the related information includes one of model information of the electronic device 100, size information of a display device of the electronic device 100, and resolution information of the display device of the electronic device 100.

Next, the electronic device 100 proceeds to step 305 and if the electronic device 100 and the at least one other electronic device are located within a second threshold distance, displays the split image by the number of at least one other electronic device. For example, if one other electronic device located within the second threshold distance is detected, the electronic device 100 can split an image to two images and then display one of the split two images.

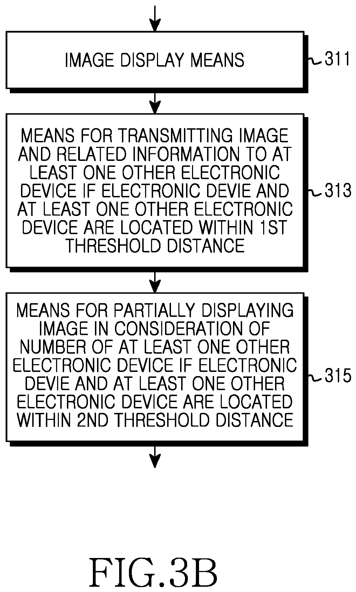

FIG. 3B illustrates a means for displaying an image in an electronic device 100.

Referring to FIG. 3B, the electronic device 100 includes a means 311 displaying an image. Here, the image refers to an image including all graphic elements (e.g., an icon, a UI, an image and the like) displayed in a display device of the electronic device 100. Also, the electronic device 100 includes a means 313 for, if the electronic device 100 and at least one other electronic device are located within a first threshold distance, transmitting the image and related information to the at least one other electronic device. Whether the at least one other electronic device is located within the first threshold distance can be determined through the motion sensor 140 and the communication unit 142. Further, the electronic device 100 includes a means 315 for, if the electronic device 100 and the at least one other electronic device are located within the second threshold distance, displaying the part of the image on the basis of the number of at least one other electronic device. Here, the partially displayed image can be a zoomed image in comparison to the first split image.

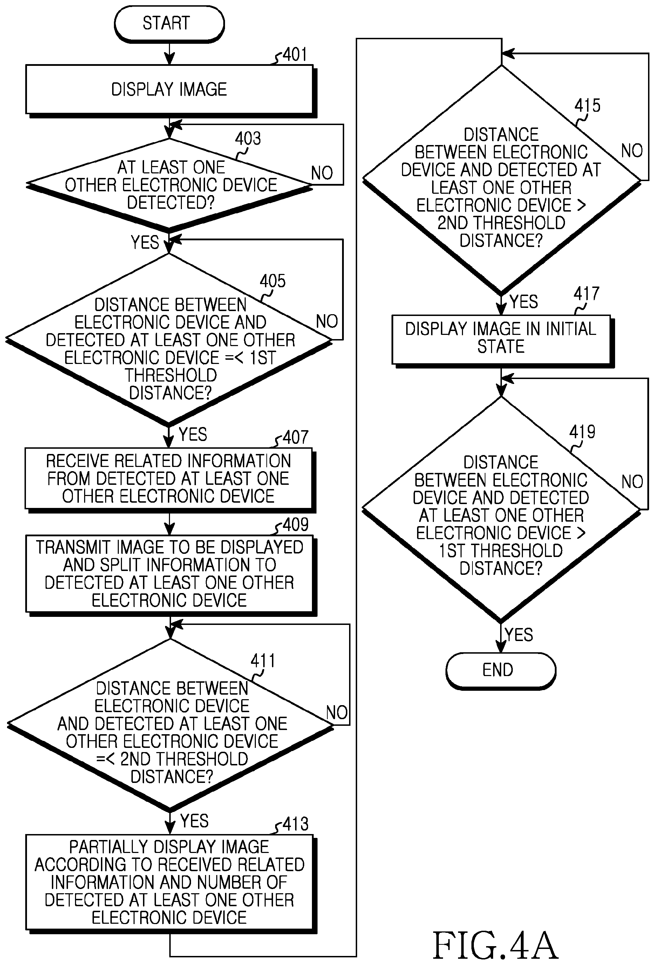

FIG. 4A illustrates a procedure of sharing an image with other electronic device with a display device of the same size and displaying the shared image in an electronic device according to an embodiment of the present disclosure.

Referring to FIG. 4A, in step 401, the electronic device 100 displays an image. Here, the image refers to an image including all graphic elements (e.g., an icon, a UI, an image and the like) displayed in a display device of the electronic device 100. Also, the image can be an image according to the execution of contents previously stored in the electronic device 100, or can be an image acquired from a server or other electronic device.

Next, in step 403, the electronic device 100 determines if at least one other electronic device is detected. At this time, the electronic device 100 can detect the at least one other electronic device through at least one of a plurality of sensors such as NFC, a motion sensor, IrDA and the like and wireless communication, and can determine a distance to the detected at least one other electronic device and the direction or location of the detected at least one other electronic device.

If it is determined in step 403 that the at least one other electronic device is not detected, the electronic device 100 returns to step 403 and again performs the subsequent steps. Alternatively, if it is determined in step 403 that the at least one other electronic device is detected, the electronic device 100 proceeds to step 405 and determines if a distance between the electronic device 100 and the detected at least one other electronic device is equal to or is less than a first threshold distance. In an embodiment, the first threshold distance can be preset in a design stage or can be configured by a user. At this time, the distance between the electronic device 100 and the detected at least one other electronic device can be measured using the motion sensor 140 and the communication unit 142.

If it is determined in step 405 that the distance between the electronic device 100 and the detected at least one other electronic device is greater than the first threshold distance, the electronic device 100 returns to step 405 and again performs the subsequent steps. Alternatively, if it is determined in step 405 that the distance between the electronic device 100 and the detected at least one other electronic device is equal to or is less than the first threshold distance, the electronic device 100 proceeds to step 407 and receives related information from the detected at least one other electronic device. Here, the related information includes one of model information of the detected at least one other electronic device, size information of a display of the detected at least one other electronic device, and resolution information of the display device of the detected at least one other electronic device.

After that, the electronic device 100 proceeds to step 409 and transmits an image to be displayed and split information to the detected at least one other electronic device. Here, the split information is one required for the electronic device 100 and the detected at least one other electronic device to operate in a split mode and display different portions of the same image. The split information can include information about a region to be displayed in each electronic device among the whole region of an original image, zoom-in information by mode, and information about a region to display an image among the whole region of a display of each electronic device. At this time, the split information can be generated in each electronic device, instead of being transmitted according to a design scheme of the electronic device 100 and a user control.

Next, the electronic device 100 proceeds to step 411 and determines if the distance between the electronic device 100 and the detected at least one other electronic device is equal to or is less than a second threshold distance. If it is determined in step 411 that the distance between the electronic device 100 and the detected at least one other electronic device is greater than the second threshold distance, the electronic device 100 returns to step 411 and again performs the subsequent steps. Alternatively, if it is determined in step 411 that the distance between the electronic device 100 and the detected at least one other electronic device is equal to or is less than the second threshold distance, the electronic device 100 proceeds to step 413 and displays the the split image according to the received related information and the number of detected at least one other electronic device. That is, the electronic device 100 displays the split image on the basis of the split information that is generated according to the received related information and the number of detected at least one other electronic device. At this time, the electronic device 100 can real-timely transmit an image to be displayed in the electronic device 100 while the distance between the electronic device 100 and the detected at least one other electronic device is equal to or is less than the first threshold distance.

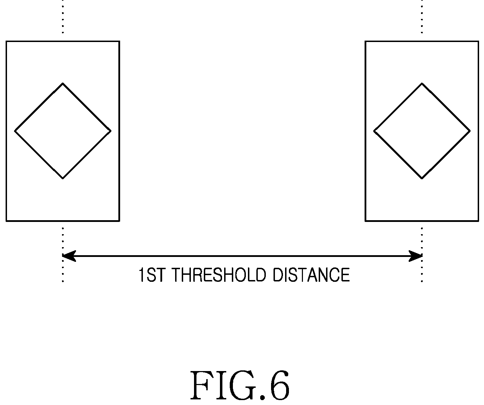

Next, the electronic device 100 proceeds to step 415 and determines if the distance between the electronic device 100 and the detected at least one other electronic device is greater than the second threshold distance. If it is determined in step 415 that the distance between the electronic device 100 and the detected at least one other electronic device is equal to or is less than the second threshold distance, the electronic device 100 returns to step 415 and again performs the subsequent steps. Alternatively, if it is determined in step 415 that the distance between the electronic device 100 and the detected at least one other electronic device is greater than the second threshold distance, the electronic device 100 proceeds to step 417 and displays the image in an initial state. In other words, if the distance between the electronic device 100 and the detected at least one other electronic device is increased greater than the second threshold distance when the electronic device 100 is displaying the the split image according to the split information, the electronic device 100 and the detected at least one other electronic device operate in a sharing mode and each display the image independently without image splitting, as illustrated in FIG. 6.

After that, in step 419, the electronic device 100 determines if the distance between the electronic device 100 and the detected at least one other electronic device is greater than the first threshold distance. If it is determined in step 419 that the distance between the electronic device 100 and the detected at least one other electronic device is equal to or is less than the first threshold distance, the electronic device 100 returns to step 419 and again performs the subsequent steps. Alternatively, if it is determined in step 419 that the distance between the electronic device 100 and the detected at least one other electronic device is greater than the first threshold distance, the electronic device 100 terminates the procedure according to the present disclosure.

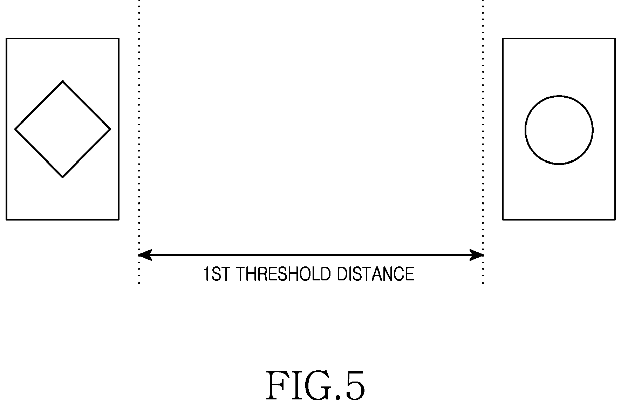

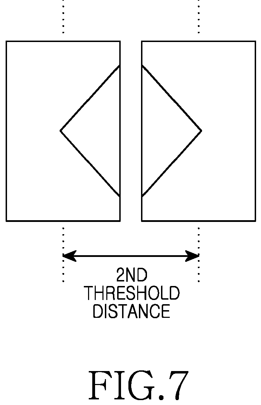

For instance, if the distance between the electronic device 100 and the detected at least one other electronic device is greater than the first threshold distance as illustrated in FIG. 5, the electronic device 100 and the detected at least one other electronic device operate separately and display different images. Next, if the distance between the electronic device 100 and the detected at least one other electronic device is equal to or is less than the first threshold distance as illustrated in FIG. 6, the electronic device 100 transmits the image of the electronic device 100 and split information thereof to the detected at least one other electronic device, so the electronic device 100 and the detected at least one other electronic device display the same image. Further, if the distance between the electronic device 100 and the detected at least one other electronic device is equal to or is less than the second threshold distance as illustrated in FIG. 7, the electronic device 100 and the detected at least one other electronic device display different regions of the same image on the basis of the split information and can obtain an effect in which two electronic devices display one image in cooperation with each other. According to this, the electronic device 100 and the detected at least one other electronic device can provide the image through a screen of a size larger than that of a screen of the electronic device 100.

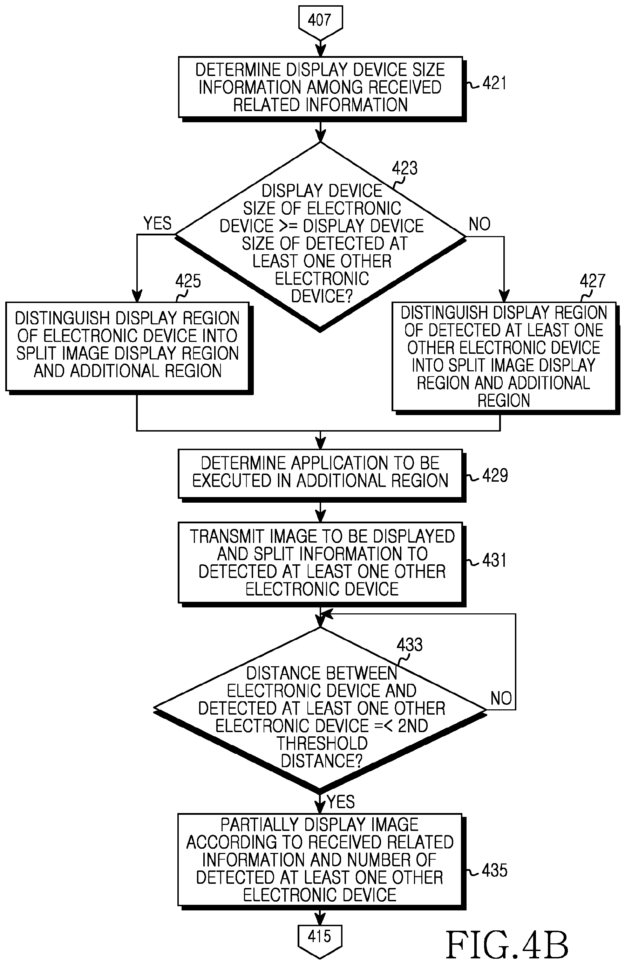

FIG. 4B illustrates a procedure of sharing an image with other electronic device with a display of a different size and displaying the shared image in an electronic device according to another embodiment of the present disclosure. Here, the following description is made assuming a state in which the electronic device 100 has already performed steps 401 to 405 of FIG. 4A.

Referring to FIG. 4B, in step 407, the electronic device 100 receives related information from detected at least one other electronic device and then, proceeds to step 421 and determines size information of a display of the detected at least one other electronic device on the basis of the received related information. At this time, in a case where the received related information includes model information of the detected at least one other electronic device, the electronic device 100 can determine the display device size information of the detected at least one other electronic device by means of previously stored display device size information by electronic device model. Next, the electronic device 100 proceed to step 423 and determines if a display device size of the electronic device 100 is equal to or is greater than a display device size of the detected at least one other electronic device.

If it is determined in step 423 that the display device size of the electronic device 100 is equal to or is greater than the display device size of the detected at least one other electronic device, the electronic device 100 proceeds to step 425 and distinguishes a display region of the electronic device 100 into a split image display region 441 and an additional region 443 as illustrated in FIG. 4C. Next, the electronic device 100 determines an application to be executed in the additional region 443 of the electronic device 100. In an exemplary embodiment, the application to be executed in the additional region 443 of the electronic device 100 includes all applications executable in the electronic device 100. Next, the electronic device 100 proceeds to step 431 and transmits an image to be displayed and split information to the detected at least one other electronic device and then, proceeds to step 433 and determines if a distance between the electronic device 100 and the detected at least one other electronic device is equal to or is less than a second threshold distance. If the distance between the electronic device 100 and the detected at least one other electronic device is greater than the second threshold distance, the electronic device 100 returns to step 433 and again performs the subsequent steps. Alternatively, if the distance between the electronic device 100 and the detected at least one other electronic device is equal to or is less than the second threshold distance, the electronic device 100 proceeds to step 435 and displays the split image that is split according to the received related information and the number of detected at least one other electronic device and split information thereof, and executes the determined application in the additional region 443 of the electronic device 100. Next, the electronic device 100 proceeds to step 415 of FIG. 4A and performs the subsequent steps. At this time, the electronic device 100 displays the image in the split image display region 441.

Alternatively, if it is determined in step 423 that the display device size of the electronic device 100 is less than the display device size of the detected at least one other electronic device, the electronic device 100 proceeds to step 427 and distinguishes a display region of the detected at least one other electronic device into a split image display region 445 and an additional region 447 as illustrated in FIG. 4D. Next, the electronic device 100 determines an application to be executed in the additional region 447 of the detected at least one other electronic device. In an exemplary embodiment, the application to be executed in the additional region 447 of the detected at least one other electronic device includes all applications executable in the detected at least one other electronic device. After that, the electronic device 100 proceeds to step 431 and transmits an image to be displayed and split information to the detected at least one other electronic device. Next, in step 433, the electronic device 100 determines if the distance between the electronic device 100 and the detected at least one other electronic device is equal to or is less than the second threshold distance. At this time, upon transmission of the image to be displayed and the split information, the electronic device 100 additionally transmits application information to be executed in the additional region 447 of the detected at least one other electronic device to the detected at least one other electronic device. The split information includes information about the image display region 445 and the additional region 447. According to this, the detected at least one other electronic device executes the application according to the application information to be executed in the additional region 447 of the detected at least one other electronic device, and displays the executed application.

If it is determined in step 433 that the distance between the electronic device 100 and the detected at least one other electronic device is greater than the second threshold distance, the electronic device 100 returns to step 433 and again performs the subsequent steps. Alternatively, if it is determined in step 433 that the distance between the electronic device 100 and the detected at least one other electronic device is equal to or is less than the second threshold distance, the electronic device 100 proceeds to step 435 and displays the the split image according to the received related information and the number of detected at least one other electronic device. And then, the electronic device 100 proceeds to step 415 of FIG. 4A and performs the subsequent steps.

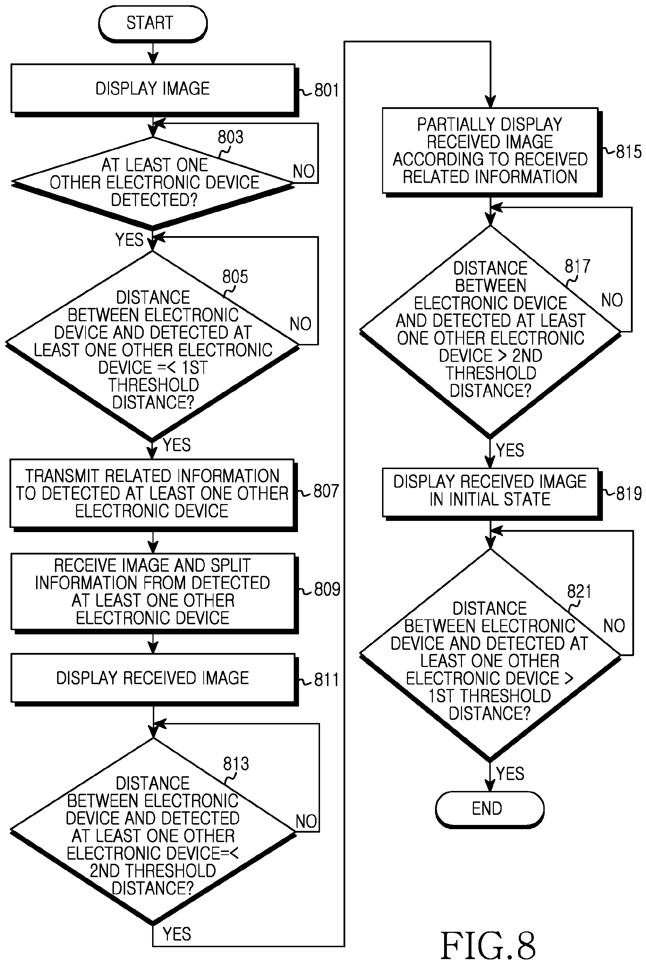

FIG. 8 illustrates a procedure of receiving a shared image from detected other electronic device and displaying the shared image in an electronic device 100 according to a further exemplary embodiment of the present disclosure.

Referring to FIG. 8, in step 801, the electronic device 100 displays an image. Here, the image refers to an image including all graphic elements (e.g., an icon, a UI, an image and the like) displayed in a display device of the electronic device 100. Next, in step 803, the electronic device 100 determines if at least one other electronic device is detected. At this time, the electronic device 100 can detect the at least one other electronic device through at least one of a plurality of sensors such as NFC, a motion sensor, IrDA and the like and wireless communication, and can determine a distance to the detected at least one other electronic device and the direction or location of the detected at least one other electronic device.

If it is determined in step 803 that the at least one other electronic device is not detected, the electronic device 100 returns to step 803 and again performs the subsequent steps. Alternatively, if it is determined in step 803 that the at least one other electronic device is detected, the electronic device 100 proceeds to step 805 and determines if a distance between the electronic device 100 and the detected at least one other electronic device is equal to or is less than a first threshold distance. In an exemplary embodiment, the first threshold distance can be preset in a design stage or can be configured by a user. If it is determined in step 805 that the distance between the electronic device 100 and the detected at least one other electronic device is greater than the first threshold distance, the electronic device 100 returns to step 805 and again performs the subsequent steps. Alternatively, if it is determined in step 805 that the distance between the electronic device 100 and the detected at least one other electronic device is equal to or is less than the first threshold distance, the electronic device 100 proceeds to step 807 and transmits related information to the detected at least one other electronic device. Here, the related information includes one of model information of the electronic device 100, size information of a display device of the electronic device 100, and resolution information of the display device of the electronic device 100.

After that, the electronic device 100 proceeds to step 809 and receives an image and split information from the detected at least one other electronic device. The split information can include information about a region to be displayed in each electronic device among the whole region of an original image, zoom-in information by mode, and information about a region to display an image among the whole region of a display device of each electronic device.

Next, the electronic device 100 proceeds to step 811 and displays the received image. For instance, if the received image is a video image of the detected at least one other electronic device, the electronic device 100 can receive the video image and then display the received video image. At this time, the electronic device 100 can real-timely receive the video image from the detected at least one other electronic device and, as if a video application is run in the electronic device 100, the electronic device 100 can display the received video image.

After that, in step 813, the electronic device 100 determines if the distance between the electronic device 100 and the detected at least one other electronic device is equal to or is less than a second threshold distance. If it is determined in step 813 that the distance between the electronic device 100 and the detected at least one other electronic device is greater than the second threshold distance, the electronic device 100 returns to step 813 and again performs the subsequent steps. Alternatively, if it is determined in step 813 that the distance between the electronic device 100 and the detected at least one other electronic device is equal to or is less than the second threshold distance, the electronic device 100 proceeds to step 815 and displays the received image according to the received related information. That is, the electronic device 100 can split the received image according to the split information received from the detected at least one other electronic device and then zoom in and display the split image, or can determine a region to be displayed among the received image according to the split information and then zoom in and display only the determined region.

Next, the electronic device 100 proceeds to step 817 and determines if the distance between the electronic device 100 and the detected at least one other electronic device is greater than the second threshold distance. If it is determined in step 817 that the distance between the electronic device 100 and the detected at least one other electronic device is equal to or is less than the second threshold distance, the electronic device 100 returns to step 817 and again performs the subsequent steps. Alternatively, if it is determined in step 817 that the distance between the electronic device 100 and the detected at least one other electronic device is greater than the second threshold distance, the electronic device 100 proceeds to step 819 and displays the received image of the detected at least one other electronic device in an initial state. In other words, if the distance between the electronic device 100 and the detected at least one other electronic device is increased greater than the second threshold distance when the electronic device 100 is displaying the split image, the electronic device 100 and the detected at least one other electronic device each display an image independently without image splitting, as illustrated in FIG. 6.

After that, in step 821, the electronic device 100 determines if the distance between the electronic device 100 and the detected at least one other electronic device is greater than the first threshold distance. If it is determined in step 821 that the distance between the electronic device 100 and the detected at least one other electronic device is equal to or is less than the first threshold distance, the electronic device 100 returns to step 821 and again performs the subsequent steps. Alternatively, if it is determined in step 821 that the distance between the electronic device 100 and the detected at least one other electronic device is greater than the first threshold distance, the electronic device 100 terminates the procedure according to the present disclosure. At this time, if the distance between the electronic device 100 and the detected at least one other electronic device is greater than the first threshold distance, the electronic device 100 can display an image of the electronic device 100 before displaying the image of the detected at least one other electronic device.

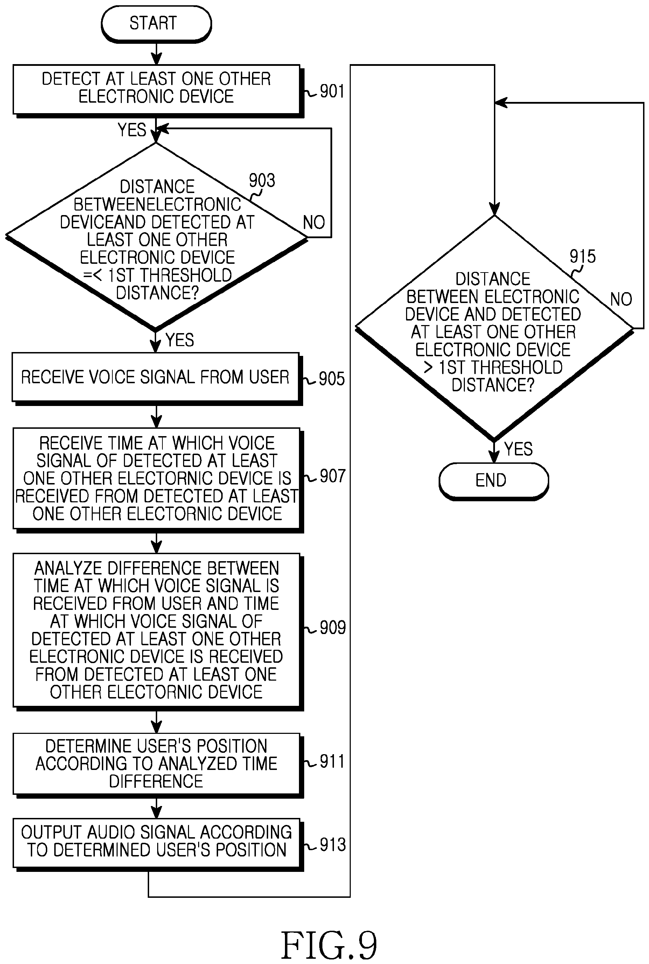

FIG. 9 illustrates a procedure of outputting an audio signal based on a user's position in an electronic device 100.

Referring to FIG. 9, in step 901, the electronic device 100 detects at least one other electronic device. At this time, the electronic device 100 can detect the at least one other electronic device through at least one of a plurality of sensors such as NFC, a motion sensor, IrDA and the like and wireless communication, and can determine a distance to the detected at least one other electronic device and the direction or location of the detected at least one other electronic device.

After that, the electronic device 100 proceeds to step 903 and determines if a distance between the electronic device 100 and the detected at least one other electronic device is equal to or is less than a first threshold distance. If it is determined in step 903 that the distance between the electronic device 100 and the detected at least one other electronic device is greater than the first threshold distance, the electronic device 100 returns to step 901 and again performs the subsequent steps. Alternatively, if it is determined in step 903 that the distance between the electronic device 100 and the detected at least one other electronic device is equal to or is less than the first threshold distance, the electronic device 100 proceeds to step 905 and receives a voice signal from a user. At this time, the electronic device 100 can receive the voice signal from the user through the microphone 148. If other electronic device located in the first threshold distance or less is detected, the electronic device 100 can activate the microphone 148 automatically or by user control.

Next, the electronic device 100 proceeds to step 907 and receives a time at which a audio signal of the detected at least one other electronic device is received from the detected at least one other electronic device and then, proceeds to step 909 and analyzes a difference between a time at which the voice signal is received from the user and the time at which the voice signal of the detected at least one other electronic device is received from the detected at least one other electronic device. Next, the electronic device 100 proceeds to step 911 and determines a user's position according to the analyzed time difference. In detail, the electronic device 100 can analyze the time at which the audio signal reaches the electronic device 100 and the time at which the audio signal reaches the at least one other electronic device, analyze the distance between the electronic device 100 and the detected at least one other electronic device, and determine the user's position. At this time, the voice signal that the electronic device 100 receives from the user and the audio signal that the at least one other electronic device receives are audio signals generated at the same time point from the same user. If voice signals are received from a plurality of users, the electronic device 100 can analyze a difference of time at which the voice signals are received by user.

After that, the electronic device 100 proceeds to step 913 and outputs an audio signal having specific directivity according to the determined user's position. At this time, to provide a stereoscopic sound and surround system according to the determined at least one user's position, the electronic device 100 can separate an audio channel, generate a sound filter having directivity according to the number of users and a position by user, and output an audio signal through the generated sound filter. Also, the sound filter can be applied in real-timely, or a filter determined previously according to a user position can be applied according to the user position.

Next, the electronic device 100 proceeds to step 915 and determines if the distance between the electronic device 100 and the detected at least one other electronic device is greater than the first threshold distance. If it is determined in step 915 that the distance between the electronic device 100 and the detected at least one other electronic device is equal to or is less than the first threshold distance, the electronic device 100 returns to step 915 and again performs the subsequent steps. Alternatively, if it is determined in step 915 that the distance between the electronic device 100 and the detected at least one other electronic device is greater than the first threshold distance, the electronic device 100 terminates the procedure according to the present disclosure.

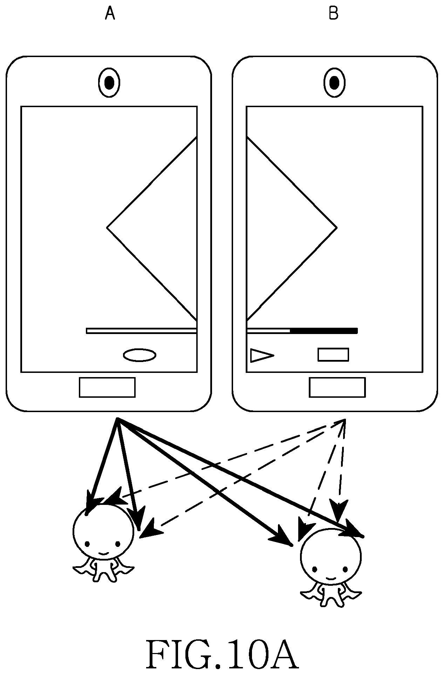

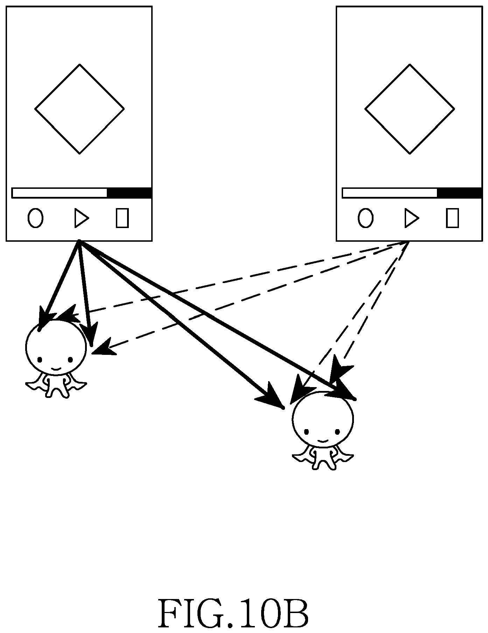

For example, if the electronic device 100 and the detected at least one other electronic device are located within a second threshold distance and thus the electronic device 100 operates in a split mode as illustrated in FIG. 10A, the electronic device 100 and the detected at least one other electronic device each estimate a position of each of two users and provide an audio signal on the basis of a sound filter having directivity corresponding to the position of each user. Further, even when the electronic device 100 and the detected at least one other electronic device are located between the first threshold distance and the second threshold distance and thus the electronic device 100 operates in a sharing mode as illustrated in FIG. 10B, the electronic device 100 and the detected at least one other electronic device each estimate a position of each of two users and provide an audio signal on the basis of a sound filter having directivity corresponding to the position of each user.

The aforementioned description has been made in which the electronic device 100 estimates a user position by using a user voice signal inputted from the microphone 148, but the electronic device 100 can analyze an image inputted from the camera 144, estimate a user position, and output an audio signal having directivity corresponding to a position of each user by using a sound filter according to the position of each user.

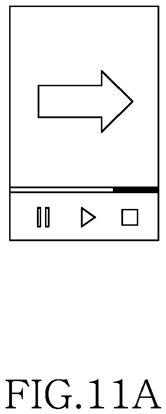

FIGS. 11A to 11D illustrate examples of transmitting an image including a video UI to detected other electronic device and displaying the image on an electronic device 100.

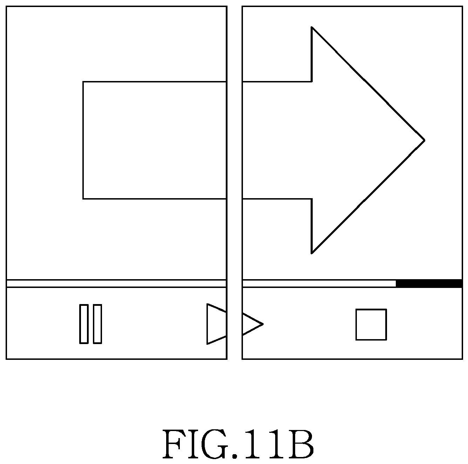

When the electronic device 100 is executing a video application as illustrated in FIG. 11A, the electronic device 100 can detect other electronic devices in the peripheral. After that, if a distance to the detected other electronic device becomes a second threshold distance or less, the electronic device 100 can transmit a video image of the electronic device 100 and split information thereof to the detected other electronic device. At this time, the electronic device 100 can transmit a UI image for controlling video execution in addition to the video image and the split information. According to this, as illustrated in FIG. 11B, the electronic device 100 and the detected other electronic device can concurrently display the video image and the UI image for controlling the video execution. At this time, if a touch on the UI image is sensed in the detected other electronic device, the detected other electronic device can transmit a coordinate of the touch-sensed UI image to the electronic device 100, and the electronic device 100 receiving the coordinate of the UI image can perform a video execution control function (e.g., pause, play, stop, fast forward, reverse and the like) corresponding to the received coordinate of the UI image, and transmit an image showing the performing result to the detected other electronic device.

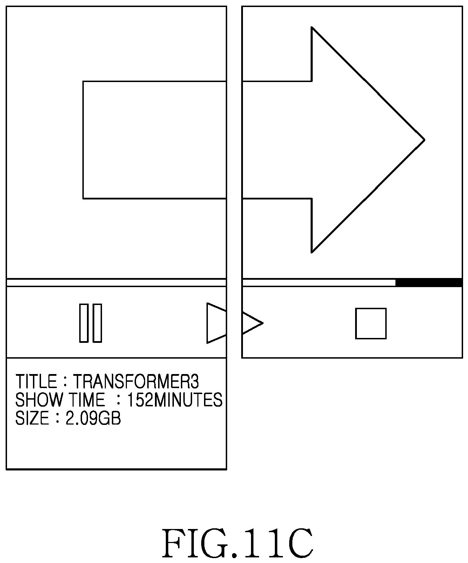

If a display device size of the electronic device 100 is larger than a display device size of the detected other electronic device, the electronic device 100 can execute other application in an additional region of the electronic device 100 as illustrated in FIG. 11C.

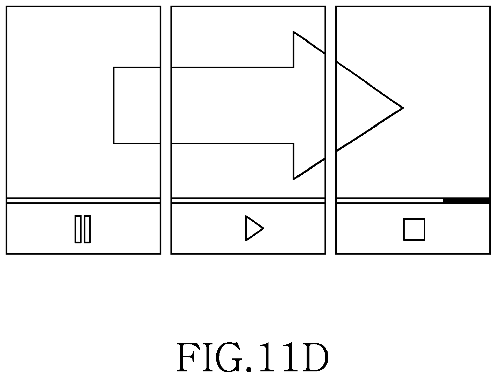

Also, even when two or more other electronic devices are detected, the electronic device 100 and the detected two or more other electronic devices can concurrently display an image and a UI image as illustrated in FIG. 11D.

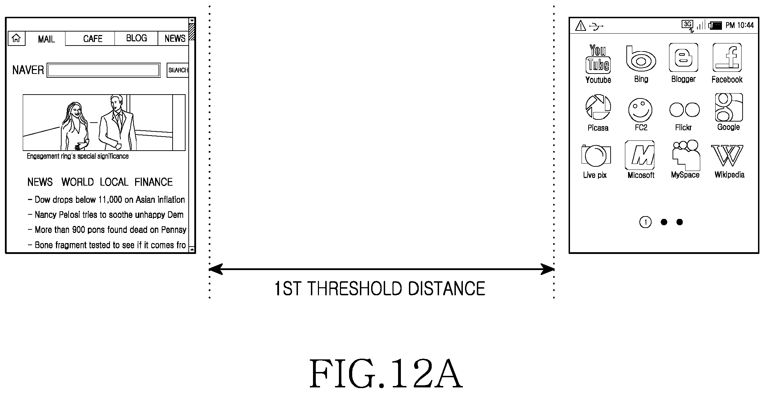

FIGS. 12A to 12C illustrate examples of sharing an Internet image according to a distance between electronic devices and displaying the shared image on a plurality of electronic devices.

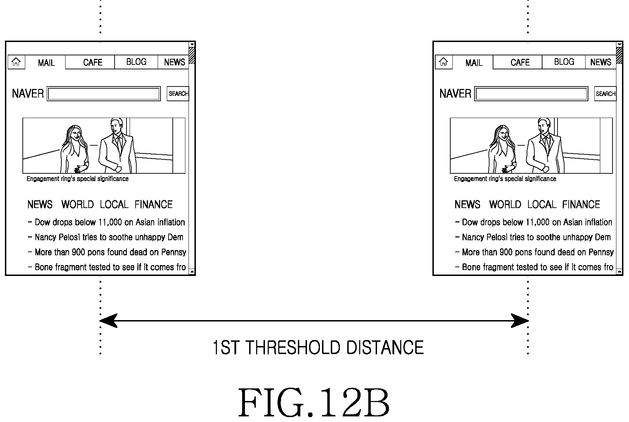

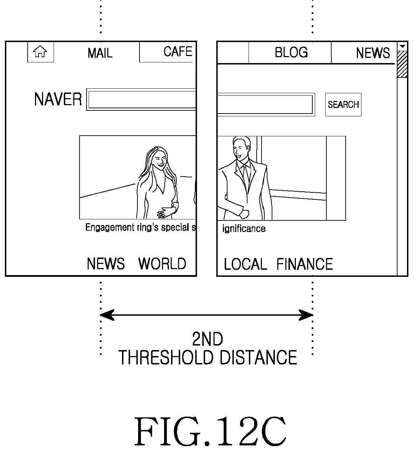

If a distance between the electronic device 100 and detected other electronic device is greater than a first threshold distance as illustrated in FIG. 12A, the electronic device 100 displays an Internet image, and the detected other electronic device displays a waiting screen (or a home screen). After that, if the distance between the electronic device 100 and the detected other electronic device is equal to or is less than the first threshold distance as illustrated in FIG. 12B, the electronic device 100 transmits the Internet image of the electronic device 100 and split information thereof to the detected other electronic device, so the electronic device 100 and the detected other electronic device display the same Internet image. Further, if the distance between the electronic device 100 and the detected other electronic device is equal to or is less than a second threshold distance as illustrated in FIG. 12C, the electronic device 100 displays an image of a left region of the Internet image according to the split information, and the detected other electronic device displays an image of a right region of the split Internet image.

According to this, the electronic device 100 can display an zoomed image in comparison to the initially displayed image of the electronic device 100, through the electronic device 100 and the detected other electronic device.

FIGS. 13A and 13B illustrate examples of determining a shared image display region in a plurality of non-aligned electronic devices. For description convenience, the following description is made by way of example assuming that one electronic device is detected. But, the present disclosure is applicable in the same scheme even when a plurality of electronic devices are detected.

Referring to FIGS. 13A and 13B, if an electronic device 100 and a detected other electronic device are located within a second threshold distance, the electronic device 100 and the detected other electronic device can display guide lines 1301 and 1303 for adjusting positions of displayed images, respectively. The guide line 1301 displayed in the electronic device 100 and the guide line 1303 displayed in the detected other electronic device can be displayed in different positions or the same position. Although the electronic device 100 and the detected other electronic device display the guide lines 1301 and 1303 in the same position, if the electronic device 100 and the detected other electronic device are not aligned in line and are located out of line as illustrated in FIG. 3A, even the guide lines 1301 and 1303 are displayed out of line in the electronic device 100 and the detected other electronic device.

Next, the electronic device 100 and the detected other electronic device can detect a user touch for moving positions of the displayed guide lines 1301 and 1303 and, according to the user touch, move a position of at least one of the guide lines 1301 and 1303 displayed in the two electronic devices. In other words, to synchronize a shared image to be displayed through the two electronic devices, a user can move the position of at least one of the guide lines 1301 and 1303 in order to align in line the guide lines 1301 and 1303 of the two electronic devices. FIG. 3A illustrates a case where a user touches and drags down the guide line 1303 of the detected other electronic device as denoted by reference numeral 1305. At this time, the two electronic devices can exchange coordinate information at which the guide lines 1301 and 1303 are located.

According to this, on the basis of the positions of the guide lines 1301 and 1305 changed according to the user touch, the electronic device 100 and the detected other electronic device determine a region to display an image among the whole region of a display device of each electronic device and a region to be displayed in each electronic device among the whole region of an original image, whereby the shared image can be aligned in line and displayed in the two electronic devices. For example, as illustrated in FIG. 13B, the electronic device 100 can display the shared image on the whole region of the display device of the electronic device 100, and the detected other electronic device can display the shared image on a partial region among the whole region of the display device of the detected other electronic device. At this time, the detected other electronic device can determine as an additional region a region where the shared image is not displayed and display other application execution image on the additional region.

The aforementioned description has been made for a scheme of receiving an image from at least one of the electronic device 100 and detected other electronic device and then displaying the received image. They can use a scheme in which the electronic device 100 and the detected other electronic device receive an image from a server providing a specific image and display the received image.

The aforementioned description has been made for a method in which the electronic device 100 and detected other electronic device transmit and receive an image and a coordinate of data inputted to the image, whereby the electronic device 100 and the detected other electronic device display the image resulting from the inputted data. When detected other electronic device has an application corresponding to an image, the electronic device 100 transmits contents corresponding to the image and a contents execution instruction to the detected other electronic device, and the detected other electronic device executes the received content. For example, when the electronic device 100 is displaying a video image, if other electronic device having a video application is detected, if the electronic device 100 transmits video content and a video application execution instruction to the detected other electronic device, the detected other electronic device can display the whole or part of a video image and UI image resulting from the execution of the corresponding video content, according to a sharing mode or a split mode.

The computer-readable medium can be a machine-readable storage medium, a machine-readable storage substrate, a memory device, a construction of material affecting a machine-readable propagation stream, or one or more combinations of them. The term of data processing device includes, for example, a programmable processor, a computer, a multiple processor, or all data processing equipments, devices, and machines including the computer. The equipment can include a code added to hardware and generating an execution environment for a corresponding computer program, for instance, a code constructing a processor firmware, a protocol stack, a database management system, an operating system, or one or more combinations of them.

While the disclosure has been shown and described with reference to certain preferred embodiments thereof, it will be understood by those skilled in the art that various changes in form and details may be made therein without departing from the scope of the disclosure as defined by the appended claims.

## Claims

1. A method of displaying an image on a portable electronic communications device (100) configured to perform the steps of the method, the method comprising:
displaying an image on the portable electronic communications device (401);
detecting presence of at least one other portable electronic communications device (403);
determining a distance to the at least one other detected portable electronic communications device (403); and
if the portable electronic communications device (100) and the detected at least one other portable electronic communications device are located within a first threshold distance (405):
receiving related information on one of a model, a display size and a display resolution of the detected at least one other portable electronic communications device from the detected at least one other portable electronic communications device (407);
generating split information for the portable electronic communications device (100) and the detected at least one other portable electronic communications device to operate in a split mode to display different portions of the image, wherein the split information is generated on the basis of the related information and a number of detected at least one other portable electronic communications device;
transmitting the image to the at least one other portable electronic communications device to display the image on the at least one other portable electronic communications device (409);
transmitting the split information to the at least one other portable electronic communications device (409); and
if the portable electronic communications device (100) and the detected at least one other portable electronic communications device are located within a second threshold distance (411), where the second threshold is less than the first threshold distance:
displaying, on the portable electronic communications device (100), one of the different portions of the image based on the split information (413);
if the portable electronic communications device (100) and the detected at least one other portable electronic communications device are located beyond the second threshold distance (415):
displaying the image on the portable electronic communications device (417); and
if the portable electronic communications device (100) and the detected at least one other portable electronic communications device are located beyond the first threshold distance (419):
terminating the method.

2. The method of claim 1, further comprising:
receiving related information on the display size of the detected at least one other portable electronic communications device and related information on at least one of the model, the resolution, a location, and the number of the detected at least one other portable electronic communications device (407); and
generating the split information on the basis of the related information by:
comparing a display size of the portable electronic communications device (100) with a display size of the detected at least one other portable electronic communications device (423); and
distinguishing a region of a display device of a larger size into an image display region and an additional region (425, 427), the additional region used for displaying other image resulting according to an application execution, and
wherein the split information comprises information on at least one of a portion of the image to be displayed in each portable electronic communications device, a factor by which to increase the displayed size of an image or image portion, and a region for displaying an image among the whole region of a display device of each portable electronic communications device.

3. The method of claim 2, wherein generating the split information comprises:
displaying a guide line (1301) in the portable electronic communications device (100) for alignment of images to be displayed in the portable electronic communications device (100) and the detected at least one other portable electronic communications device;
receiving a coordinate corresponding to a guide line from the detected at least one other portable electronic communications device; and
generating the split information on the basis of a coordinate at which the guide line of the portable electronic communications device (100) is displayed and the coordinate received from the detected other portable electronic communications device.

4. The method of claim 1, further comprising:
capturing an image of at least one user by using a camera (144);
determining a position of the at least one user on the basis of the captured image; and
outputting an audio signal by using a sound filter corresponding to the determined position of the at least one user.

5. The method of claim 1, further comprising:
receiving a coordinate of an image from the detected at least one other portable electronic communications device;
executing a function of a user interface corresponding to the coordinate of the image;
transmitting an image corresponding to the execution result, to the detected at least one other portable electronic communications device; and
displaying the image corresponding to the execution result in the portable electronic communications device (100).

6. A method of displaying an image on a portable electronic communications device (100) configured to perform the steps of the method, the method comprising:
displaying a first image on the portable electronic communications device (801);
detecting at least one other portable electronic communications device (803);
determining a distance to the at least one other detected portable electronic communications device (803); and
if the portable electronic communications device (100) and the detected at least one other portable electronic communications device are located within a first threshold distance (805):
transmitting related information on one of a model, a display size and a resolution of the display of the portable electronic communications device to the at least one other portable electronic communications device (807);
receiving an image and split information from the detected at least one other portable electronic communications device (809), the split information being for the portable electronic communications device (100) and the detected at least one other portable electronic communications device to operate in a split mode to display different portions of the received image;
displaying the received image (811); and
if the portable electronic communications device(100) and the detected at least one other portable electronic communications device are located within a second threshold distance (813), where the second threshold distance is less than the first threshold distance:
displaying, on the portable electronic communications device (100), one of the different portions of the received image on the basis of the split information (815);
if the portable electronic communications device (100) and the detected at least one other portable electronic communications device are located beyond the second threshold distance (817):
displaying the first image on the portable electronic communications device (819); and
if the portable electronic communications device (100) and the detected at least one other portable electronic communications device are located beyond the first threshold distance (821):
terminating the method.

7. The method of claim 6, further comprising:
if the portable electronic communications device (100) and the detected at least one other portable electronic communications device are located within the first threshold distance, transmitting related information on the display size of the portable electronic communications device and related information on at least one of the model, the resolution and a location of the portable electronic communications device to the detected at least one other portable electronic communications device.

8. The method of claim 6, further comprising:
displaying a guide line (1301) in the portable electronic communications device (100) for aligning the different portions of images to be displayed on the portable electronic communications device (100) and the detected at least one other portable electronic communications device;
determining a coordinate of the guide line (1301) according to a user control; and
transmitting the determined coordinate of the guide line (1301) to the detected at least one other portable electronic communications device.

9. The method of claim 6, further comprising:
capturing an image of at least one user by using a camera;
transmitting the captured image to the detected at least one other portable electronic communications device;
receiving sound filter information corresponding to a position of the at least one user from the detected at least one other portable electronic communications device; and
outputting an audio signal by using the received sound filter information.

10. The method of claim 6, further comprising:
while displaying the received image, detecting a user touch; and
transmitting a coordinate of an image corresponding to the detected user touch, to the detected at least one other portable electronic communications device.

11. A method of sharing an image between a first portable electronic communications device and a second portable electronic communications device, wherein the first portable electronic communications device operates in accordance with the method of any of claims 1 to 5, and wherein the second portable electronic communications device operates in accordance with the method of any of claims 6 to 10.

12. A portable electronic communications device (100) for displaying an image, comprising:
a display device (130) configured to present information;a memory (110) configured to storing data and instructions; and
one or more programs stored in the memory and configured to be executed by one or more processors (120),
wherein the program comprises an instruction set for:
displaying an image on the display device (401);
detecting at least one other portable electronic communications device (403);
determining a distance to the at least one other detected portable electronic communications device (403); and
if the portable electronic communications device (100) and the detected at least one other portable electronic communications device are located within a first threshold distance (405):
receiving related information on one of a model, a display size and a display resolution of the detected at least one other portable electronic communications device from the detected at least one other portable electronic communications device (407);
generating split information for the portable electronic communications device (100) and the detected at least one other portable electronic communications device to operate in a split mode to display different portions of the image, wherein the split information is generated on the basis of the related information and a number of detected at least one other portable electronic communications device;
transmitting the image to the at least one other portable electronic communications device to display the image on the at least one other portable electronic communications device (409);
transmitting the split information to the at least one other portable electronic communications device (409); and
if the portable electronic communications device (100) and the detected at least one other portable electronic communications device are located within a second threshold distance (411), where the second threshold is less than the first threshold distance:
displaying, on the portable electronic communications device, one of the different portions of the image based on the split information (413);
if the portable electronic communications device (100) and the detected at least one other portable electronic communications device are located beyond the second threshold distance (415):
displaying the image on the portable electronic communications device (417); and
if the portable electronic communications device (100) and the detected at least one other portable electronic communications device are located beyond the first threshold distance (419):
terminating the instruction set.

13. The portable electronic communications device (100) of claim 12, wherein the program comprises an instruction set for receiving related information on the display size of the of the detected at least one other portable electronic communications device and related information on at least one of the model, the resolution, a location, and the number of the detected at least one other portable electronic communications device (407), generating the split information on the basis of the related information, comparing a display size of the portable electronic communications device (100) to a display size of the detected at least one other portable electronic communications device (423), distinguishing a region of a display device of a larger size into an image display region and an additional region (425, 427), the additional region used for displaying other image resulting according to an application execution, and wherein the split information comprises information on at least one of a portion of the image to be displayed in each portable electronic communications device, a factor by which to increase the displayed size of an image or image portion, and a region for displaying an image among the whole region of a display device of each portable electronic communications device.

14. The portable electronic communications device (100) of claim 12, wherein the program further comprises an instruction set for displaying a guide line (1301) in the display device of the portable electronic communications device (100) for aligning images to be displayed on the portable electronic communications device and the detected at least one other portable electronic communications device, receiving a coordinate corresponding to a guide line from the detected at least one other portable electronic communications device, and generating the split information on the basis of a coordinate at which the guide line of the portable electronic communications device (100) is displayed and the coordinate received from the detected other portable electronic communications device.

15. The portable electronic communications device (100) of claim 12, further comprising:
a camera (144) configured to capture an image of at least one user; and a speaker configured to output an audio signal,
wherein the program further comprises an instruction set for determining a position of the at least one user on the basis of the captured image, and outputting an audio signal by using a sound filter corresponding to the determined position of the at least one user.

16. The portable electronic communications device (100) of claim 12, wherein the program further comprises an instruction set for receiving a coordinate of an image from the detected at least one other portable electronic communications device, executing a function of a user interface corresponding to the coordinate of the image, transmitting an image corresponding to the execution result to the detected at least one other portable electronic communications device, and displaying the image corresponding to the execution result in the portable electronic communications device (100).

17. A portable electronic communications device (100) for displaying an image, comprising:
a display device (130) configured to present information;
a memory (110) configured to store data and instructions; and
one or more programs stored in the memory and configured to be executed by one or more processors (120),
wherein the program comprises an instruction set for:
displaying a first image on the portable electronic communications device (801);
detecting at least one other portable electronic communications device (803),
determining a distance to the at least one other detected portable electronic communications device (803); and
if the portable electronic communications device (100) and the detected at least one other portable electronic communications device are located within a first threshold distance (805):
transmitting related information on one of a model, a display size and a resolution of the display of the portable electronic communications device to the at least one other portable electronic communications device (807);
receiving an image and split information from the detected at least one other portable electronic communications device (809), the split information being for the portable electronic communications device (100) and the detected at least one other portable electronic communications device to operate in a split mode to display different portions of the image;
displaying the received image (811); and
if the portable electronic communications device (100) and the detected at least one other portable electronic communications device are located within a second threshold distance (813), where the second threshold is less than the first threshold distance:
displaying, on the portable electronic communications device, one of the different portions of the image on the basis of the split information (815);
if the portable electronic communications device (100) and the detected at least one other portable electronic communications device are located beyond the second threshold distance (817):
displaying the first image on the portable electronic communications device (819); and
if the portable electronic communications device (100) and the detected at least one other portable electronic communications device are located beyond the first threshold distance (821):
terminating the instruction set.

18. The portable electronic communications device (100) of claim 17,
wherein the program further comprises an instruction set for, if the portable electronic communications device (100) and the detected at least one other portable electronic communications device are located within the first threshold distance, transmitting related information on the display size of the portable electronic communications device and related information of at least one of the model, the resolution, and a location of the portable electronic communications device to the detected at least one other portable electronic communications device.

19. The portable electronic communications device (100) of claim 17,
wherein the program further comprises an instruction set for displaying a guide line (1301) in the display device of the portable electronic communications device (100) for aligning the different portions of images to be displayed in the portable electronic communications device (100) and the detected at least one other portable electronic communications device, determining a coordinate of the guide line (1301) according to a user control, and transmitting the determined coordinate of the guide line to the detected at least one other portable electronic communications device.

20. The portable electronic communications device (100) of claim 17,
wherein the display device is a touch sense display device, and wherein the program further comprises an instruction set for, while displaying the received image, detecting a user touch, and transmitting a coordinate of an image corresponding to the detected user touch, to the detected at least one other portable electronic communications device.

## Patentansprüche

1. Verfahren zum Anzeigen eines Bildes auf einer tragbaren elektronischen Kommunikationsvorrichtung (100), die dafür konfiguriert ist, die Schritte des Verfahrens durchzuführen, wobei das Verfahren Folgendes umfasst:
Anzeigen eines Bildes auf der tragbaren elektronischen Kommunikationsvorrichtung (401);
Erkennen der Anwesenheit von mindestens einer anderen tragbaren elektronischen Kommunikationsvorrichtung (403);
Bestimmen eines Abstands zu der mindestens einen anderen erkannten tragbaren elektronischen Kommunikationsvorrichtung (403); und
wenn die tragbare elektronische Kommunikationsvorrichtung (100) und die erkannte mindestens eine andere tragbare elektronische Kommunikationsvorrichtung innerhalb eines ersten Schwellenabstandes (405) angeordnet sind:
Empfangen von zugehörigen Informationen über ein Modell, eine Anzeigegröße oder eine Bildschirmauflösung der erkannten mindestens einen anderen tragbaren elektronischen Kommunikationsvorrichtung von der erkannten mindestens einen anderen tragbaren elektronischen Kommunikationsvorrichtung (407);
Erzeugen von Aufteilungsinformationen für die tragbare elektronische Kommunikationsvorrichtung (100) und die erkannte mindestens eine andere tragbare elektronische Kommunikationsvorrichtung, um in einem Aufteilungsmodus zu arbeiten, um verschiedene Teile des Bildes anzuzeigen, wobei die Aufteilungsinformationen basierend auf den zugehörigen Informationen und einer Anzahl von erkannten mindestens einer anderen tragbaren elektronischen Kommunikationsvorrichtung erzeugt werden;
Übertragen des Bildes an die mindestens eine andere tragbare elektronische Kommunikationsvorrichtung, um das Bild auf der mindestens einen anderen tragbaren elektronischen Kommunikationsvorrichtung (409) anzuzeigen;
Übertragen der Aufteilungsinformationen an die mindestens eine andere tragbare elektronische Kommunikationsvorrichtung (409); und,
wenn die tragbare elektronische Kommunikationsvorrichtung (100) und die erkannte mindestens eine andere tragbare elektronische Kommunikationsvorrichtung innerhalb eines zweiten Schwellenabstandes (411) angeordnet sind, wobei der zweite Schwellenwert kleiner als der erste Schwellenwert ist:
Anzeigen eines der verschiedenen Abschnitte des Bildes auf der tragbaren elektronischen Kommunikationsvorrichtung (100) basierend auf den Aufteilungsinformationen (413);
wenn die tragbare elektronische Kommunikationsvorrichtung (100) und die erkannte mindestens eine andere tragbare elektronische Kommunikationsvorrichtung jenseits des zweiten Schwellenabstandes (415) angeordnet sind:
Anzeigen des Bildes auf der tragbaren elektronischen Kommunikationsvorrichtung (417); und
wenn die tragbare elektronische Kommunikationsvorrichtung (100) und die erkannte mindestens eine andere tragbare elektronische Kommunikationsvorrichtung jenseits des ersten Schwellenabstandes (419) angeordnet sind:
Beenden des Verfahrens.

2. Verfahren nach Anspruch 1, die ferner Folgendes umfasst:
Empfangen von zugehörigen Informationen über die Anzeigegröße der erkannten mindestens einen anderen tragbaren elektronischen Kommunikationsvorrichtung und von zugehörigen Informationen über mindestens das Modell, die Auflösung, einen Ort oder die Anzahl der erkannten mindestens einen anderen tragbaren elektronischen Kommunikationsvorrichtung (407); und
Erzeugen der Aufteilungsinformationen basierend auf den zugehörigen Informationen durch:
Vergleichen einer Anzeigegröße der tragbaren elektronischen Kommunikationsvorrichtung (100) mit einer Anzeigegröße der erkannten mindestens einen anderen tragbaren elektronischen Kommunikationsvorrichtung (423); und
Unterscheiden eines Bereichs einer Anzeigevorrichtung von größerer Größe in einen Bildanzeigebereich und einen zusätzlichen Bereich (425, 427), wobei der zusätzliche Bereich zur Anzeige eines anderen Bildes verwendet wird, das sich gemäß einer Anwendungsausführung ergibt, und
wobei die Aufteilungsinformationen Informationen über mindestens eines von Folgendem umfassen: einen Teil des Bildes, der in jeder tragbaren elektronischen Kommunikationsvorrichtung angezeigt werden soll, einen Faktor, um den die angezeigte Größe eines Bildes oder Bildteils erhöht werden soll, und einen Bereich zum Anzeigen eines Bildes aus dem gesamten Bereich einer Anzeigevorrichtung jeder tragbaren elektronischen Kommunikationsvorrichtung.

3. Verfahren nach Anspruch 2, wobei das Erzeugen der Aufteilungsinformationen Folgendes umfasst:
Anzeigen einer Führungslinie (1301) auf der tragbaren elektronischen Kommunikationsvorrichtung (100) zum Ausrichten von Bildern, die auf der tragbaren elektronischen Kommunikationsvorrichtung (100) und der erkannten mindestens einen anderen tragbaren elektronischen Kommunikationsvorrichtung angezeigt werden sollen;
Empfangen einer Koordinate, die einer Führungslinie entspricht, von der erkannten mindestens einen anderen tragbaren elektronischen Kommunikationsvorrichtung; und
Erzeugen der Aufteilungsinformationen basierend auf einer Koordinate, bei der die Führungslinie der tragbaren elektronischen Kommunikationsvorrichtung (100) angezeigt wird, und der Koordinate, die von der erkannten anderen tragbaren elektronischen Kommunikationsvorrichtung empfangen wird.

4. Verfahren nach Anspruch 1, die ferner Folgendes umfasst:
Aufnehmen eines Bildes von mindestens einem Benutzer unter Verwendung einer Kamera (144);
Bestimmen einer Position des mindestens einen Benutzers basierend auf dem aufgenommenen Bild; und
Ausgeben eines Audiosignals, indem ein Schallfilter verwendet wird, der der bestimmten Position des mindestens einen Benutzers entspricht.

5. Verfahren nach Anspruch 1, die ferner Folgendes umfasst:
Empfangen einer Koordinate eines Bildes von der erkannten mindestens einen anderen tragbaren elektronischen Kommunikationsvorrichtung;
Ausführen einer Funktion einer Benutzerschnittstelle entsprechend der Koordinate des Bildes;
Übertragen eines Bildes entsprechend dem Ausführungsergebnis an die erkannte mindestens eine andere tragbare elektronische Kommunikationsvorrichtung; und
Anzeigen des Bildes entsprechend dem Ausführungsergebnis auf der tragbaren elektronischen Kommunikationsvorrichtung (100).

6. Verfahren zum Anzeigen eines Bildes auf einer tragbaren elektronischen Kommunikationsvorrichtung (100), die dafür konfiguriert ist, die Schritte des Verfahrens durchzuführen, wobei das Verfahren Folgendes umfasst:
Anzeigen eines ersten Bildes auf der tragbaren elektronischen Kommunikationsvorrichtung (801);
Erkennen von mindestens einer anderen tragbaren elektronischen Kommunikationsvorrichtung (803);
Bestimmen eines Abstands zu der mindestens einen anderen erkannten tragbaren elektronischen Kommunikationsvorrichtung (803); und
wenn die tragbare elektronische Kommunikationsvorrichtung (100) und die erkannte mindestens eine andere tragbare elektronische Kommunikationsvorrichtung innerhalb eines ersten Schwellenabstandes (805) angeordnet sind:
Übertragen von zugehörigen Informationen über ein Modell, eine Anzeigegröße oder eine Auflösung der Anzeige der tragbaren elektronischen Kommunikationsvorrichtung an die mindestens eine andere tragbare elektronische Kommunikationsvorrichtung (807);
Empfangen eines Bildes und von Aufteilungsinformationen von der erkannten mindestens einen anderen tragbaren elektronischen Kommunikationsvorrichtung (809), wobei die Aufteilungsinformationen für die tragbare elektronische Kommunikationsvorrichtung (100) und die erkannte mindestens eine andere tragbare elektronische Kommunikationsvorrichtung dienen, damit diese in einem Aufteilungsmodus arbeiten, um verschiedene Abschnitte des empfangenen Bildes anzuzeigen;
Anzeigen des empfangenen Bildes (811); und
wenn die tragbare elektronische Kommunikationsvorrichtung (100) und die erkannte mindestens eine andere tragbare elektronische Kommunikationsvorrichtung innerhalb eines zweiten Schwellenabstandes (813) angeordnet sind, wobei der zweite Schwellenabstand kleiner als der erste Schwellenwert ist:
Anzeigen eines der verschiedenen Abschnitte des empfangenen Bildes auf der tragbaren elektronischen Kommunikationsvorrichtung (100) basierend auf den Aufteilungsinformationen (815);
wenn die tragbare elektronische Kommunikationsvorrichtung (100) und die erkannte mindestens eine andere tragbare elektronische Kommunikationsvorrichtung jenseits des zweiten Schwellenabstandes (817) angeordnet sind:
Anzeigen des ersten Bildes auf der tragbaren elektronischen Kommunikationsvorrichtung (819); und
wenn die tragbare elektronische Kommunikationsvorrichtung (100) und die erkannte mindestens eine andere tragbare elektronische Kommunikationsvorrichtung jenseits des ersten Schwellenabstandes (821) angeordnet sind:
Beenden des Verfahrens.

7. Verfahren nach Anspruch 6, die ferner Folgendes umfasst:
wenn die tragbare elektronische Kommunikationsvorrichtung (100) und die erkannte mindestens eine andere tragbare elektronische Kommunikationsvorrichtung innerhalb des ersten Schwellenabstandes angeordnet sind: Übertragen von zugehörigen Informationen über die Anzeigegröße der tragbaren elektronischen Kommunikationsvorrichtung und von zugehörigen Informationen über mindestens das Modell, die Auflösung und einen Ort der tragbaren elektronischen Kommunikationsvorrichtung an die erkannte mindestens eine andere tragbare elektronische Kommunikationsvorrichtung.

8. Verfahren nach Anspruch 6, die ferner Folgendes umfasst:
Anzeigen einer Führungslinie (1301) auf der tragbaren elektronischen Kommunikationsvorrichtung (100) zum Ausrichten der verschiedenen Teile von Bildern, die auf der tragbaren elektronischen Kommunikationsvorrichtung (100) und der erkannten mindestens einen anderen tragbaren elektronischen Kommunikationsvorrichtung angezeigt werden sollen;
Bestimmen einer Koordinate der Führungslinie (1301) gemäß einer Benutzersteuerung; und
Übertragen der bestimmten Koordinate der Führungslinie (1301) an die erkannte mindestens eine andere tragbare elektronische Kommunikationsvorrichtung.

9. Verfahren nach Anspruch 6, die ferner Folgendes umfasst:
Erfassen eines Bildes von mindestens einem Benutzer unter Verwendung einer Kamera;
Übertragen des aufgenommenen Bildes an die erkannte mindestens eine andere tragbare elektronische Kommunikationsvorrichtung;
Empfangen von Schallfilterinformationen, die einer Position des mindestens einen Benutzers entsprechen, von der erkannten mindestens einen anderen tragbaren elektronischen Kommunikationsvorrichtung; und
Ausgeben eines Audiosignals, unter Verwendung der empfangenen Schallfilterinformationen.

10. Verfahren nach Anspruch 6, die ferner Folgendes umfasst:
während das empfangene Bild angezeigt wird, Erkennen einer Benutzerberührung; und
Übertragen einer Koordinate eines Bildes, das der erkannten Benutzerberührung entspricht, an die erkannte mindestens eine andere tragbare elektronische Kommunikationsvorrichtung.

11. Verfahren zum Teilen eines Bildes zwischen einer ersten tragbaren elektronischen Kommunikationsvorrichtung und einer zweiten tragbaren elektronischen Kommunikationsvorrichtung, wobei die erste tragbare elektronische Kommunikationsvorrichtung gemäß dem Verfahren nach einem der Ansprüche 1 bis 5 arbeitet und die zweite tragbare elektronische Kommunikationsvorrichtung gemäß dem Verfahren nach einem der Ansprüche 6 bis 10 arbeitet.

12. Tragbare elektronische Kommunikationsvorrichtung (100) zum Anzeigen eines Bildes, die Folgendes umfasst:
eine Anzeigevorrichtung (130), die dafür konfiguriert ist, Informationen darzustellen,
einen Speicher (110), der dafür konfiguriert ist, Daten und Befehle zu speichern; und ein oder mehrere Programme, die in dem Speicher gespeichert sind und dafür konfiguriert sind, von einem oder mehreren Prozessoren (120) ausgeführt zu werden,
wobei das Programm einen Befehlssatz für Folgendes umfasst:
Anzeigen eines Bildes auf der Anzeigevorrichtung (401);
Erkennen von mindestens einer anderen tragbaren elektronischen Kommunikationsvorrichtung (403);
Bestimmen eines Abstands zu der mindestens einen anderen erkannten tragbaren elektronischen Kommunikationsvorrichtung (403); und
wenn die tragbare elektronische Kommunikationsvorrichtung (100) und die erkannte mindestens eine andere tragbare elektronische Kommunikationsvorrichtung innerhalb eines ersten Schwellenabstandes (405) angeordnet sind:
Empfangen von zugehörigen Informationen über ein Modell, eine Anzeigegröße oder eine Bildschirmauflösung der erkannten mindestens einen anderen tragbaren elektronischen Kommunikationsvorrichtung von der erkannten mindestens einen anderen tragbaren elektronischen Kommunikationsvorrichtung (407);
Erzeugen von Aufteilungsinformationen für die tragbare elektronische Kommunikationsvorrichtung (100) und die erkannte mindestens eine andere tragbare elektronische Kommunikationsvorrichtung, damit diese in einem Aufteilungsmodus arbeiten, um verschiedene Abschnitte des empfangenen Bildes anzuzeigen, wobei die Aufteilungsinformationen basierend auf den zugehörigen Informationen und einer Anzahl von erkannten mindestens einer anderen tragbaren elektronischen Kommunikationsvorrichtung erzeugt werden;
Übertragen des Bildes an die mindestens eine andere tragbare elektronische Kommunikationsvorrichtung, um das Bild auf der mindestens einen anderen tragbaren elektronischen Kommunikationsvorrichtung (409) anzuzeigen;
Übertragen der Aufteilungsinformationen an die mindestens eine andere tragbare elektronische Kommunikationsvorrichtung (409); und,
wenn die tragbare elektronische Kommunikationsvorrichtung (100) und die erkannte mindestens eine andere tragbare elektronische Kommunikationsvorrichtung innerhalb eines zweiten Schwellenabstandes (411) angeordnet sind, wobei der zweite Schwellenwert kleiner als der erste Schwellenwert ist:
Anzeigen eines der verschiedenen Abschnitte des Bildes auf der tragbaren elektronischen Kommunikationsvorrichtung basierend auf den Aufteilungsinformationen (413);
wenn die tragbare elektronische Kommunikationsvorrichtung (100) und die erkannte mindestens eine andere tragbare elektronische Kommunikationsvorrichtung jenseits des zweiten Schwellenabstandes (415) angeordnet sind:
Anzeigen des Bildes auf der tragbaren elektronischen Kommunikationsvorrichtung (417); und
wenn die tragbare elektronische Kommunikationsvorrichtung (100) und die erkannte mindestens eine andere tragbare elektronische Kommunikationsvorrichtung jenseits des ersten Schwellenabstandes (419) angeordnet sind:
Beenden des Befehlssatzes.

13. Tragbare elektronische Kommunikationsvorrichtung (100) nach Anspruch 12, wobei das Programm einen Befehlssatz für Folgendes umfasst: Empfangen von zugehörigen Informationen über die Anzeigegröße der erkannten mindestens einen anderen tragbaren elektronischen Kommunikationsvorrichtung und von zugehörigen Informationen über mindestens das Modell, die Auflösung, einen Ort oder die Anzahl der erkannten mindestens einen anderen tragbaren elektronischen Kommunikationsvorrichtung (407), Erzeugen der Aufteilungsinformationen basierend auf den zugehörigen Informationen, Vergleichen einer Anzeigegröße der tragbaren elektronischen Kommunikationsvorrichtung (100) mit einer Anzeigegröße der erkannten mindestens einen anderen tragbaren elektronischen Kommunikationsvorrichtung (423), Unterscheiden eines Bereichs einer Anzeigevorrichtung von größerer Größe in einen Bildanzeigebereich und einen zusätzlichen Bereich (425, 427), wobei der zusätzliche Bereich zur Anzeige eines anderen Bildes verwendet wird, das sich gemäß einer Anwendungsausführung ergibt, und wobei die Aufteilungsinformationen Informationen über mindestens eines von Folgendem umfassen: einen Teil des Bildes, der in jeder tragbaren elektronischen Kommunikationsvorrichtung angezeigt werden soll, einen Faktor, um den die angezeigte Größe eines Bildes oder Bildteils erhöht werden soll, und einen Bereich zum Anzeigen eines Bildes aus dem gesamten Bereich einer Anzeigevorrichtung jeder tragbaren elektronischen Kommunikationsvorrichtung.

14. Tragbare elektronische Kommunikationsvorrichtung (100) nach Anspruch 12, wobei das Programm ferner einen Befehlssatz zum Anzeigen einer Führungslinie (1301) in der Anzeigevorrichtung der tragbaren elektronischen Kommunikationsvorrichtung (100) für Folgendes umfasst: Ausrichten von Bildern, die auf der tragbaren elektronischen Kommunikationsvorrichtung und der erkannten mindestens einen anderen tragbaren elektronischen Kommunikationsvorrichtung angezeigt werden sollen, Empfangen einer Koordinate, die einer Führungslinie entspricht, von der erkannten mindestens einen anderen tragbaren elektronischen Kommunikationsvorrichtung, und Erzeugen der Aufteilungsinformationen basierend auf einer Koordinate, bei der die Führungslinie der tragbaren elektronischen Kommunikationsvorrichtung (100) angezeigt wird, und der Koordinate, die von der erkannten anderen tragbaren elektronischen Kommunikationsvorrichtung empfangen wird.

15. Tragbare elektronische Kommunikationsvorrichtung (100) nach Anspruch 12, die ferner Folgendes umfasst:
eine Kamera (144), die dafür konfiguriert ist, ein Bild von mindestens einem Benutzer zu erfassen; und einen Lautsprecher, der dafür konfiguriert ist, ein Audiosignal auszugeben,
wobei das Programm ferner einen Befehlssatz zum Bestimmen einer Position des mindestens einen Benutzers basierend auf dem aufgenommenen Bild umfasst, und ein Audiosignal auszugeben, indem ein Schallfilter verwendet wird, der der bestimmten Position des mindestens einen Benutzers entspricht.

16. Tragbare elektronische Kommunikationsvorrichtung (100) nach Anspruch 12,
wobei das Programm ferner einen Befehlssatz für Folgendes umfasst: Empfangen einer Koordinate eines Bildes von der erkannten mindestens einen anderen tragbaren elektronischen Kommunikationsvorrichtung, Ausführen einer Funktion einer Benutzerschnittstelle entsprechend der Koordinate des Bildes, Übertragen eines Bildes entsprechend dem Ausführungsergebnis an die erkannte mindestens eine andere tragbare elektronische Kommunikationsvorrichtung, und Anzeigen des Bildes entsprechend dem Ausführungsergebnis auf der tragbaren elektronischen Kommunikationsvorrichtung (100).

17. Tragbare elektronische Kommunikationsvorrichtung (100) zum Anzeigen eines Bildes, die Folgendes umfasst:
eine Anzeigevorrichtung (130), die dafür konfiguriert ist, Informationen darzustellen;
einen Speicher (110), der dafür konfiguriert ist, Daten und Befehle zu speichern; und
ein oder mehrere Programme, die in dem Speicher gespeichert sind und dafür konfiguriert sind, von einem oder mehreren Prozessoren (120) ausgeführt zu werden,
wobei das Programm einen Befehlssatz für Folgendes umfasst:
Anzeigen eines ersten Bildes auf der tragbaren elektronischen Kommunikationsvorrichtung (801);
Erkennen von mindestens einer anderen tragbaren elektronischen Kommunikationsvorrichtung (803),
Bestimmen eines Abstands zu der mindestens einen anderen erkannten tragbaren elektronischen Kommunikationsvorrichtung (803); und
wenn die tragbare elektronische Kommunikationsvorrichtung (100) und die erkannte mindestens eine andere tragbare elektronische Kommunikationsvorrichtung innerhalb eines ersten Schwellenabstandes (805) angeordnet sind:
Übertragen von zugehörigen Informationen über ein Modell, eine Anzeigegröße oder eine Auflösung der Anzeige der tragbaren elektronischen Kommunikationsvorrichtung an die mindestens eine andere tragbare elektronische Kommunikationsvorrichtung (807);
Empfangen eines Bildes und von Aufteilungsinformationen von der erkannten mindestens einen anderen tragbaren elektronischen Kommunikationsvorrichtung (809), wobei die Aufteilungsinformationen für die tragbare elektronische Kommunikationsvorrichtung (100) und die erkannte mindestens eine andere tragbare elektronische Kommunikationsvorrichtung dienen, damit diese in einem Aufteilungsmodus arbeiten, um verschiedene Abschnitte des empfangenen Bildes anzuzeigen;
Anzeigen des empfangenen Bildes (811); und
wenn die tragbare elektronische Kommunikationsvorrichtung (100) und die erkannte mindestens eine andere tragbare elektronische Kommunikationsvorrichtung innerhalb eines zweiten Schwellenabstandes (813) angeordnet sind, wobei der zweite Schwellenwert kleiner als der erste Schwellenwert ist:
Anzeigen eines der verschiedenen Abschnitte des Bildes auf der tragbaren elektronischen Kommunikationsvorrichtung basierend auf den Aufteilungsinformationen (815);
wenn die tragbare elektronische Kommunikationsvorrichtung (100) und die erkannte mindestens eine andere tragbare elektronische Kommunikationsvorrichtung jenseits des zweiten Schwellenabstandes (817) angeordnet sind:
Anzeigen des ersten Bildes auf der tragbaren elektronischen Kommunikationsvorrichtung (819); und
wenn die tragbare elektronische Kommunikationsvorrichtung (100) und die erkannte mindestens eine andere tragbare elektronische Kommunikationsvorrichtung jenseits des ersten Schwellenabstandes (821) angeordnet sind:
Beenden des Befehlssatzes.

18. Tragbare elektronische Kommunikationsvorrichtung (100) nach Anspruch 17, wobei das Programm ferner einen Befehlssatz für Folgendes umfasst: wenn die tragbare elektronische Kommunikationsvorrichtung (100) und die erkannte mindestens eine andere tragbare elektronische Kommunikationsvorrichtung innerhalb des ersten Schwellenabstandes angeordnet sind, Übertragen von zugehörigen Informationen über die Anzeigegröße der tragbaren elektronischen Kommunikationsvorrichtung und von zugehörigen Informationen über mindestens das Modell, die Auflösung und einen Ort der tragbaren elektronischen Kommunikationsvorrichtung an die erkannte mindestens eine andere tragbare elektronische Kommunikationsvorrichtung.

19. Tragbare elektronische Kommunikationsvorrichtung (100) nach Anspruch 17, wobei das Programm ferner einen Befehlssatz zum Anzeigen einer Führungslinie (1301) in der Anzeigevorrichtung der tragbaren elektronischen Kommunikationsvorrichtung (100) für Folgendes umfasst: Ausrichten der verschiedenen Teile von Bildern, die auf der tragbaren elektronischen Kommunikationsvorrichtung (100) und der erkannten mindestens einen anderen tragbaren elektronischen Kommunikationsvorrichtung angezeigt werden sollen, Bestimmen einer Koordinate der Führungslinie (1301) gemäß einer Benutzersteuerung, und Übertragen der bestimmten Koordinate der Führungslinie an die erkannte mindestens eine andere tragbare elektronische Kommunikationsvorrichtung.

20. Tragbare elektronische Kommunikationsvorrichtung (100) nach Anspruch 17, wobei die Anzeigevorrichtung eine berührungsempfindliche Anzeigevorrichtung ist und wobei das Programm ferner einen Befehlssatz für Folgendes umfasst: während das empfangene Bild angezeigt wird, Erkennen einer Benutzerberührung und Übertragen einer Koordinate eines Bildes, das der erkannten Benutzerberührung entspricht, an die erkannte mindestens eine andere tragbare elektronische Kommunikationsvorrichtung.

## Revendications

1. Un procédé d'affichage d'une image sur un dispositif de communication électronique portatif (100) configuré de façon à exécuter les opérations du procédé, le procédé comprenant :
l'affichage d'une image sur le dispositif de communication électronique portatif (401),
la détection de la présence d'au moins un autre dispositif de communication électronique portatif (403),
la détermination d'une distance au au moins un autre dispositif de communication électronique portatif détecté (403), et
si le dispositif de communication électronique portatif (100) et le au moins un autre dispositif de communication électronique portatif détecté se trouvent à l'intérieur d'une première distance seuil (405) :
la réception d'informations connexes relatives à un élément parmi un modèle, une taille d'affichage et une résolution d'affichage du au moins un autre dispositif de communication électronique portatif détecté à partir du au moins un autre dispositif de communication électronique portatif détecté (407),
la génération d'informations de division destinées au dispositif de communication électronique portatif (100) et au au moins un autre dispositif de communication électronique portatif détecté de façon à fonctionner dans un mode division de façon à afficher des parties différentes de l'image, où les informations de division sont générées en fonction des informations connexes et d'un nombre d'au moins un autre dispositif de communication électronique portatif détecté,
la transmission de l'image au au moins un autre dispositif de communication électronique portatif de façon à afficher l'image sur le au moins un autre dispositif de communication électronique portatif (409),
la transmission des informations de division au au moins un autre dispositif de communication électronique portatif (409), et
si le dispositif de communication électronique portatif (100) et le au moins un autre dispositif de communication électronique portatif détecté se trouvent à l'intérieur d'une deuxième distance seuil (411), où le deuxième seuil est inférieur à la première distance seuil :
l'affichage, sur le dispositif de communication électronique portatif (100), d'une des parties différentes de l'image en fonction des informations de division (413),
si le dispositif de communication électronique portatif (100) et le au moins un autre dispositif de communication électronique portatif détecté se trouvent au-delà de la deuxième distance seuil (415) :
l'affichage de l'image sur le dispositif de communication électronique portatif (417), et
si le dispositif de communication électronique portatif (100) et le au moins un autre dispositif de communication électronique portatif détecté se trouvent au-delà de la première distance seuil (419) :
la terminaison du procédé.

2. Le procédé selon la Revendication 1, comprenant en outre :
la réception d'informations connexes relatives à la taille d'affichage du au moins un autre dispositif de communication électronique portatif détecté et d'informations connexes relatives à au moins un élément parmi le modèle, la résolution, un emplacement et le nombre des au moins un autre dispositif de communication électronique portatif détectés (407), et
la génération des informations de division en fonction des informations connexes par :
la comparaison d'une taille d'affichage du dispositif de communication électronique portatif (100) à une taille d'affichage du au moins un autre dispositif de communication électronique portatif détecté (423), et
la distinction d'une zone d'un dispositif d'affichage d'une taille plus grande en une zone d'affichage d'image et une zone additionnelle (425, 427), la zone additionnelle étant utilisée pour l'affichage d'une autre image résultant d'une exécution d'application, et
où les informations de division comprennent des informations relatives à au moins un élément parmi une partie de l'image à afficher dans chaque dispositif de communication électronique portatif, un facteur par lequel augmenter la taille affichée d'une image ou d'une partie d'image et une zone destinée à l'affichage d'une image parmi la totalité de la zone d'un dispositif d'affichage de chaque dispositif de communication électronique portatif.

3. Le procédé selon la Revendication 2, où la génération des informations de division comprend :
l'affichage d'une ligne de guidage (1301) dans le dispositif de communication électronique portatif (100) destinée à l'alignement d'images à afficher dans le dispositif de communication électronique portatif (100) et le au moins un autre dispositif de communication électronique portatif détecté,
la réception d'une coordonnée correspondant à une ligne de guidage à partir du au moins un autre dispositif de communication électronique portatif détecté, et
la génération des informations de division en fonction d'une coordonnée à laquelle la ligne de guidage du dispositif de communication électronique portatif (100) est affichée et de la coordonnée reçue à partir de l'autre dispositif de communication électronique portatif détecté.

4. Le procédé selon la Revendication 1, comprenant en outre :
la capture d'une image d'au moins un utilisateur au moyen d'un appareil photo (144),
la détermination d'une position du au moins un utilisateur en fonction de l'image capturée, et
la production en sortie d'un signal audio au moyen d'un filtre de sons correspondant à la position déterminée du au moins un utilisateur.

5. Le procédé selon la Revendication 1, comprenant en outre :
la réception d'une coordonnée d'une image à partir du au moins un autre dispositif de communication électronique portatif détecté,
l'exécution d'une fonction d'une interface utilisateur correspondant à la coordonnée de l'image,
la transmission d'une image correspondant au résultat de l'exécution au au moins un autre dispositif de communication électronique portatif détecté, et
l'affichage de l'image correspondant au résultat de l'exécution dans le dispositif de communication électronique portatif (100).

6. Un procédé d'affichage d'une image sur un dispositif de communication électronique portatif (100) configuré de façon à exécuter les opérations du procédé, le procédé comprenant :
l'affichage d'une première image sur le dispositif de communication électronique portatif (801),
la détection d'au moins un autre dispositif de communication électronique portatif (803),
la détermination d'une distance au au moins un autre dispositif de communication électronique portatif détecté (803), et
si le dispositif de communication électronique portatif (100) et le au moins un autre dispositif de communication électronique portatif détecté se trouvent à l'intérieur d'une première distance seuil (805) :
la transmission d'informations connexes relatives à un élément parmi un modèle, une taille d'affichage et une résolution de l'affichage du dispositif de communication électronique portatif au au moins un autre dispositif de communication électronique portatif (807),
la réception d'une image et d'informations de division à partir du au moins un autre dispositif de communication électronique portatif détecté (809), les informations de division étant destinées au dispositif de communication électronique portatif (100) et au au moins un autre dispositif de communication électronique portatif détecté de façon à fonctionner dans un mode division de façon à afficher des parties différentes de l'image reçue,
l'affichage de l'image reçue (811), et
si le dispositif de communication électronique portatif (100) et le au moins un autre dispositif de communication électronique portatif détecté se trouvent à l'intérieur d'une deuxième distance seuil (813), où la deuxième distance seuil est inférieure à la première distance seuil :
l'affichage, sur le dispositif de communication électronique portatif (100), d'une des parties différentes de l'image reçue en fonction des informations de division (815),
si le dispositif de communication électronique portatif (100) et le au moins un autre dispositif de communication électronique portatif détecté se trouvent au-delà de la deuxième distance seuil (817) :
l'affichage de la première image sur le dispositif de communication électronique portatif (819), et
si le dispositif de communication électronique portatif (100) et le au moins un autre dispositif de communication électronique portatif détecté se trouvent au-delà de la première distance seuil (821) :
la terminaison du procédé.

7. Le procédé selon la Revendication 6, comprenant en outre :
si le dispositif de communication électronique portatif (100) et le au moins un autre dispositif de communication électronique portatif détecté se trouvent à l'intérieur de la première distance seuil, la transmission d'informations connexes relatives à la taille d'affichage du dispositif de communication électronique portatif et d'informations connexes relatives à au moins un élément parmi le modèle, la résolution et un emplacement du dispositif de communication électronique portatif au au moins un autre dispositif de communication électronique portatif détecté.

8. Le procédé selon la Revendication 6, comprenant en outre :
l'affichage d'une ligne de guidage (1301) dans le dispositif de communication électronique portatif (100) destinée à l'alignement des parties différentes d'images à afficher sur le dispositif de communication électronique portatif (100) et le au moins un autre dispositif de communication électronique portatif détecté,
la détermination d'une coordonnée de la ligne de guidage (1301) en fonction d'une commande d'utilisateur, et
la transmission de la coordonnée déterminée de la ligne de guidage (1301) au au moins un autre dispositif de communication électronique portatif détecté.

9. Le procédé selon la Revendication 6, comprenant en outre :
la capture d'une image d'au moins un utilisateur au moyen d'un appareil photo,
la transmission de l'image capturée au au moins un autre dispositif de communication électronique portatif détecté,
la réception d'informations de filtre de sons correspondant à une position du au moins un utilisateur à partir du au moins un autre dispositif de communication électronique portatif détecté, et
la production en sortie d'un signal audio au moyen des informations de filtre de sons reçues.

10. Le procédé selon la Revendication 6, comprenant en outre :
pendant l'affichage de l'image reçue, la détection d'un contact tactile d'utilisateur, et
la transmission d'une coordonnée d'une image correspondant au contact tactile d'utilisateur détecté au au moins un autre dispositif de communication électronique portatif détecté.

11. Un procédé de partage d'une image entre un premier dispositif de communication électronique portatif et un deuxième dispositif de communication électronique portatif, où le premier dispositif de communication électronique portatif fonctionne conformément au procédé selon l'une quelconque des Revendications 1 à 5, et où le deuxième dispositif de communication électronique portatif fonctionne conformément au procédé selon l'une quelconque des Revendications 6 à 10.

12. Un dispositif de communication électronique portatif (100) destiné à l'affichage d'une image, comprenant :
un dispositif d'affichage (130) configuré de façon à présenter des informations,
une mémoire (110) configurée de façon à conserver en mémoire des données et des instructions, et
un ou plusieurs programmes conservés en mémoire dans la mémoire et configurés de façon à être exécutés par un ou plusieurs processeurs (120),
où le programme contient un jeu d'instructions destiné à :
l'affichage d'une image sur le dispositif d'affichage (401),
la détection d'au moins un autre dispositif de communication électronique portatif (403),
la détermination d'une distance au au moins un autre dispositif de communication électronique portatif détecté (403), et
si le dispositif de communication électronique portatif (100) et le au moins un autre dispositif de communication électronique portatif détecté se trouvent à l'intérieur d'une première distance seuil (405) :
la réception d'informations connexes relatives à un élément parmi un modèle, une taille d'affichage et une résolution d'affichage du au moins un autre dispositif de communication électronique portatif détecté à partir du au moins un autre dispositif de communication électronique portatif détecté (407),
la génération d'informations de division destinées au dispositif de communication électronique portatif (100) et au au moins un autre dispositif de communication électronique portatif détecté de façon à fonctionner dans un mode division de façon à afficher des parties différentes de l'image, où les informations de division sont générées en fonction des informations connexes et d'un nombre d'au moins un autre dispositif de communication électronique portatif détecté,
la transmission de l'image au au moins un autre dispositif de communication électronique portatif de façon à afficher l'image sur le au moins un autre dispositif de communication électronique portatif (409),
la transmission des informations de division au au moins un autre dispositif de communication électronique portatif (409), et
si le dispositif de communication électronique portatif (100) et le au moins un autre dispositif de communication électronique portatif détecté se trouvent à l'intérieur d'une deuxième distance seuil (411), où le deuxième seuil est inférieur à la première distance seuil :
l'affichage, sur le dispositif de communication électronique portatif, d'une des parties différentes de l'image en fonction des informations de division (413),
si le dispositif de communication électronique portatif (100) et le au moins un autre dispositif de communication électronique portatif détecté se trouvent au-delà de la deuxième distance seuil (415) :
l'affichage de l'image sur le dispositif de communication électronique portatif (417), et
si le dispositif de communication électronique portatif (100) et le au moins un autre dispositif de communication électronique portatif détecté se trouvent au-delà de la première distance seuil (419) :
la terminaison du jeu d'instructions.

13. Le dispositif de communication électronique portatif (100) selon la Revendication 12, où le programme comprend un jeu d'instructions destiné à la réception d'informations connexes relatives à la taille d'affichage du au moins un autre dispositif de communication électronique portatif détecté et d'informations connexes relatives à au moins un élément parmi le modèle, la résolution, un emplacement et le nombre des au moins un autre dispositif de communication électronique portatif détectés (407), la génération des informations de division en fonction des informations connexes, la comparaison d'une taille d'affichage du dispositif de communication électronique portatif (100) à une taille d'affichage du au moins un autre dispositif de communication électronique portatif détecté (423), la distinction d'une zone d'un dispositif d'affichage d'une taille plus grande en une zone d'affichage d'image et une zone additionnelle (425, 427), la zone additionnelle étant utilisée pour l'affichage d'une autre image résultant d'une exécution d'application, et où les informations de division comprennent des informations relatives à au moins un élément parmi une partie de l'image à afficher dans chaque dispositif de communication électronique portatif, un facteur par lequel augmenter la taille affichée d'une image ou d'une partie d'image et une zone destinée à l'affichage d'une image parmi la totalité de la zone d'un dispositif d'affichage de chaque dispositif de communication électronique portatif

14. Le dispositif de communication électronique portatif (100) selon la Revendication 12, où le programme comprend en outre un jeu d'instructions destiné à l'affichage d'une ligne de guidage (1301) dans le dispositif d'affichage du dispositif de communication électronique portatif (100) destinée à l'alignement d'images à afficher sur le dispositif de communication électronique portatif et le au moins un autre dispositif de communication électronique portatif détecté, la réception d'une coordonnée correspondant à une ligne de guidage à partir du au moins un autre dispositif de communication électronique portatif détecté, et la génération des informations de division en fonction d'une coordonnée à laquelle la ligne de guidage du dispositif de communication électronique portatif (100) est affichée et de la coordonnée reçue à partir de l'autre dispositif de communication électronique portatif détecté.

15. Le dispositif de communication électronique portatif (100) selon la Revendication 12, comprenant en outre :
un appareil photo (144) configuré de façon à capturer une image d'au moins un utilisateur, et un haut-parleur configuré de façon à produire en sortie un signal audio,
où le programme comprend en outre un jeu d'instructions destiné à la détermination d'une position du au moins un utilisateur en fonction de l'image capturée, et la production en sortie d'un signal audio au moyen d'un filtre de sons correspondant à la position déterminée du au moins un utilisateur.

16. Le dispositif de communication électronique portatif (100) selon la Revendication 12,
où le programme comprend en outre un jeu d'instructions destiné à la réception d'une coordonnée d'une image à partir du au moins un autre dispositif de communication électronique portatif détecté, à l'exécution d'une fonction d'une interface utilisateur correspondant à la coordonnée de l'image, à la transmission d'une image correspondant au résultat de l'exécution au au moins un autre dispositif de communication électronique portatif détecté et à l'affichage de l'image correspondant au résultat de l'exécution dans le dispositif de communication électronique portatif (100).

17. Un dispositif de communication électronique portatif (100) destiné à l'affichage d'une image, comprenant :
un dispositif d'affichage (130) configuré de façon à présenter des informations,
une mémoire (110) configurée de façon à conserver en mémoire des données et des instructions, et
un ou plusieurs programmes conservés en mémoire dans la mémoire et configurés de façon à être exécutés par un ou plusieurs processeurs (120),
où le programme comprend un jeu d'instructions destiné à :
l'affichage d'une première image sur le dispositif de communication électronique portatif (801),
la détection d'au moins un autre dispositif de communication électronique portatif (803),
la détermination d'une distance au au moins un autre dispositif de communication électronique portatif détecté (803), et
si le dispositif de communication électronique portatif (100) et le au moins un autre dispositif de communication électronique portatif détecté se trouvent à l'intérieur d'une première distance seuil (805) :
la transmission d'informations connexes relatives à un élément parmi un modèle, une taille d'affichage et une résolution de l'affichage du dispositif de communication électronique portatif au au moins un autre dispositif de communication électronique portatif (807),
la réception d'une image et d'informations de division à partir du au moins un autre dispositif de communication électronique portatif détecté (809), les informations de division étant destinées au dispositif de communication électronique portatif (100) et au au moins un autre dispositif de communication électronique portatif détecté de façon à fonctionner dans un mode division de façon à afficher des parties différentes de l'image,
l'affichage de l'image reçue (811), et
si le dispositif de communication électronique portatif (100) et le au moins un autre dispositif de communication électronique portatif détecté se trouvent à l'intérieur d'une deuxième distance seuil (813), où le deuxième seuil est inférieur à la première distance seuil :
l'affichage, sur le dispositif de communication électronique portatif, d'une des parties différentes de l'image en fonction des informations de division (815),
si le dispositif de communication électronique portatif (100) et le au moins un autre dispositif de communication électronique portatif détecté se trouvent au-delà de la deuxième distance seuil (817) :
l'affichage de la première image sur le dispositif de communication électronique portatif (819), et
si le dispositif de communication électronique portatif (100) et le au moins un autre dispositif de communication électronique portatif détecté se trouvent au-delà de la première distance seuil (821) :
la terminaison du jeu d'instructions.

18. Le dispositif de communication électronique portatif (100) selon la Revendication 17, où le programme comprend en outre un jeu d'instructions destiné à, si le dispositif de communication électronique portatif (100) et le au moins un autre dispositif de communication électronique portatif détecté se trouvent à l'intérieur de la première distance seuil, la transmission d'informations connexes relatives à la taille d'affichage du dispositif de communication électronique portatif et d'informations connexes d'au moins un élément parmi le modèle, la résolution et un emplacement du dispositif de communication électronique portatif au au moins un autre dispositif de communication électronique portatif détecté.

19. Le dispositif de communication électronique portatif (100) selon la Revendication 17, où le programme comprend en outre un jeu d'instructions destiné à l'affichage d'une ligne de guidage (1301) dans le dispositif d'affichage du dispositif de communication électronique portatif (100) destinée à l'alignement des parties différentes d'images à afficher dans le dispositif de communication électronique portatif (100) et le au moins un autre dispositif de communication électronique portatif détecté, la détermination d'une coordonnée de la ligne de guidage (1301) en fonction d'une commande d'utilisateur et la transmission de la coordonnée déterminée de la ligne de guidage au au moins un autre dispositif de communication électronique portatif détecté.

20. Le dispositif de communication électronique portatif (100) selon la Revendication 17, où le dispositif d'affichage est un dispositif d'affichage à détection tactile, et où le programme comprend en outre un jeu d'instructions destiné à, pendant l'affichage de l'image reçue, la détection d'un contact tactile d'utilisateur, et la transmission d'une coordonnée d'une image correspondant au contact tactile d'utilisateur détecté au au moins un autre dispositif de communication électronique portatif détecté.
